# EUROPEAN PATENT APPLICATION

(11) **EP 4 138 425 A1**
(43) Date of publication of application: **22.02.2023**
(21) Application number: 20932063.9
(22) Date of filing: 22.04.2020
(51) Int. Cl.: H04W 4/40

(54) **SIDELINK RESOURCE ALLOCATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN)
(74) Representative: Ipside
(86) International application number: PCT/CN2020/086165
(87) International publication number: WO 2021/212371

(57) **Abstract**

The embodiments of the present application relate to a sidelink resource allocation method and a terminal device. The method comprises: a first terminal allocating a sidelink transmission resource to a second terminal, the sidelink transmission resource being used for the second terminal to transmit at least one piece of sidelink data. The embodiments of the present application can achieve the effect that one terminal allocates a sidelink transmission resource to other terminals.

## Description

### TECHNICAL FIELD

The present disclosure relates to the field of communication technologies, and in particular to a sidelink resource allocation method and a terminal device.

### BACKGROUND

Device-to-device (D2D) communication is a sidelink (SL) based transmission technology. Unlike conventional cellular systems where communication data is received or transmitted through a base station, D2D systems have higher spectral efficiency and lower transmission latency. Vehicle to everything (V2X) systems adopt a direct terminal-to-terminal communication. In New Radio (NR)-V2X, autonomous driving is required to be supported, which places higher demands on data interaction between vehicles, such as higher throughput, lower latency, higher reliability, larger coverage, more flexible resource allocation, etc. In the SL transmission, a terminal may be set as a central control node (e.g., a group-head terminal in multicast communication), which allocates sidelink transmission resources for other terminals, and the specific allocation method has not been determined at present.

### SUMMARY OF THE DISCLOSURE

The present disclosure provides a sidelink resource allocation method, a terminal device, and a communication device, such that a terminal can allocate sidelink transmission resources to other terminals.

The present disclosure provides a sidelink resource allocation method, including:
allocating, by a first terminal, a sidelink transmission resource to a second terminal; wherein the sidelink transmission resource is used for the second terminal to transmit at least one sidelink data.

The present disclosure further provides a sidelink resource allocation method, including:
determining, by a second terminal, at least one sidelink transmission resource allocated by a first terminal; and
transmitting, by the second terminal, at least one sidelink data through the at least one sidelink transmission resource.

The present disclosure further provides a terminal device, including:
an allocation module, used to allocate a sidelink transmission resource to a second terminal; wherein the sidelink transmission resource is used for the second terminal to transmit at least one sidelink data.

The present disclosure further provides a terminal device, including:
a determining module, used to determine at least one sidelink transmission resource allocated by a first terminal; and
a transmission module, used to transmit at least one sidelink data through the at least one sidelink transmission resource.

The present disclosure further provides a terminal device, including a processor and a memory; wherein the memory is used to store a computer program, and the processor is used to call and execute the computer program stored in the memory to perform the above method.

The present disclosure further provides a chip, including a processor used to call and execute a computer program stored in a memory to cause a device arranged with the chip to perform the above method.

The present disclosure further provides a computer-readable storage medium, used to store a computer program capable of causing a computer to perform the above method.

The present disclosure further provides a computer program product, comprising a computer program capable of causing a computer to perform the above method.

The present disclosure further provides a computer program, capable of causing a computer to perform the above method.

In the present disclosure, the allocation of sidelink transmission resources by one terminal for other terminals is achieved by the first terminal allocating sidelink transmission resources for the second terminal, and the sidelink transmission resources are used for the second terminal to transmit at least one side-line data.

### BRIEF DESCRIPTION OF THE DRAWINGS

FIG. 1 is a schematic view of an application scenario according to an embodiment of the present disclosure.
FIG. 2A is a schematic view of a sidelink communication within a network coverage.
FIG. 2B is a schematic view of a sidelink communication partially within a network coverage.
FIG. 2C is a schematic view of a sidelink communication outside a network coverage.
FIG. 3A is a schematic view of a unicast transmission.
FIG. 3B is a schematic view of a multicast transmission.
FIG. 3C is a schematic view of a broadcast transmission.
FIG. 4 is a flowchart of a sidelink resource allocation method 400 according to an embodiment of the present disclosure.
FIG. 5 is a schematic view of a sidelink resource allocation.
FIG. 6 is a flowchart of a sidelink resource allocation method 600 according to another embodiment of the present disclosure.
FIG. 7A is a schematic view of a determined sidelink resource allocation according to Embodiment 3 of the present disclosure.
FIG. 7B is another schematic view of a determined sidelink resource allocation according to Embodiment 3 of the present disclosure.
FIG. 8 is a flowchart of a sidelink resource allocation method 800 according to further another embodiment of the present disclosure.
FIG. 9 is a structural schematic view of a terminal device 900 according to an embodiment of the present disclosure.
FIG. 10 is a structural schematic view of a terminal device 1000 according to another embodiment of the present disclosure.
FIG. 11 is a structural schematic view of a terminal device 1100 according to further another embodiment of the present disclosure.
FIG. 12 is a structural schematic view of a terminal device 1200 according to further another embodiment of the present disclosure.
FIG. 13 is a structural schematic view of a communication device 1300 according to an embodiment of the present disclosure.
FIG. 14 is a structural schematic view of a chip 1400 according to an embodiment of the present disclosure.

### DETAILED DESCRIPTION

The technical solutions in the embodiments of the present disclosure will be described below in conjunction with the drawings in the embodiments of the present disclosure.

It should be noted that the terms "first" and "second" in the description of the embodiments, claims, and the above-mentioned drawings of the present disclosure are intended to distinguish similar objects, and are not necessarily intended to describe a specific sequence or order. The objects described by "first" and "second" described may be the same or different.

The technical solutions of the embodiments of the present disclosure may be applied to various communication systems, such as: global system of mobile communication (GSM) system, code division multiple access (CDMA) system, wideband code division multiple access (WCDMA) system, general packet radio service (GPRS), long term evolution (LTE) system, advanced long term evolution (LTE-A) system , new radio (NR) system, evolution of NR system, LTE-based access to unlicensed spectrum (LTE-U) system, NR-based access to unlicensed spectrum (NR-U) system, universal mobile telecommunication system (UMTS), wireless local area networks (WLAN), wireless fidelity (Wi-Fi), next generation communication (5th-Generation, 5G) system, etc.

Generally, conventional communication systems support a limited number of connections and are easy to implement. However, with the development of communication technology, mobile communication systems will not only support conventional communication, but also supports, for example, device to device (D2D) communication, machine to machine (M2M) communication, machine type communication (MTC), vehicle to vehicle (V2V) communication, etc. The embodiments of the present disclosure may also be applied to these communication systems.

In some embodiments, the communication system in the embodiments of the present disclosure may be applied to a carrier aggregation (CA) scenario, and a dual connectivity (DC) scenario, and a standalone (SA) deployment scenario.

The embodiments of the present disclosure do not limit the applied frequency spectrum. For example, the embodiments of the present disclosure may be applied to licensed spectrum or unlicensed spectrum.

The embodiments of the present disclosure describe various embodiments in combination with a network device and a terminal device. The terminal device may also be referred to as user equipment (UE), access terminal, user unit, user station, mobile platform, mobile station, remote station, remote terminal, mobile device, user terminal, terminal, wireless communication device, user agent, or user device, etc. The terminal device may be a station (STAION, ST) in a WLAN, a cell phone, a cordless phone, a session initiation protocol (SIP) phone, a wireless local loop (WLL) station, and a personal digital assistant (PDA) device, a handheld device with wireless communication capabilities, a computing devices or other processing devices connected to wireless modems, a vehicle-mounted device, a wearable device, and a terminal device in next-generation communication systems, such as in the NR network, or a terminal device in future evolved public land mobile network (PLMN) networks, etc.

As an example and not a limitation, in the embodiments of the present disclosure, the terminal device may be a wearable device. The wearable device may be called a wearable smart device, which is a general term for devices that can be worn on a daily basis, which are intelligently designed and developed with the application of wearable technology, such as glasses, gloves, watches, clothing, and shoes. The wearable device is a portable device that can be directly worn on the body or integrated into the user's clothes or accessories. The wearable device is not only a kind of hardware device, but also realizes powerful functions through software support, data interaction, and cloud interaction. In a broad sense, the wearable smart device includes full-featured and large-sized devices, capable of realizing complete or partial functions without relying on smart phones, such as smart watches or smart glasses; and includes devices only focusing on a certain type of application function, under the needs of cooperating with other devices such as smart phones, such as various types of smart bracelets, smart jewelry, etc., for physical signs monitoring.

The network device may be a device used to communicate with mobile devices. The network device may be an access point (AP) in WLAN, a base station (base transceiver station, BTS) in GSM or CDMA, a base station (NodeB, NB) in WCDMA, an evolved base station (evolutional node B, eNB or eNodeB) in LTE, a relay station or access point, a vehicle-mounted device, a wearable device, a network device in NR networks (gNB) or in future evolved PLMN networks, etc.

In the embodiments of the present disclosure, the network device provides services for a cell, and the terminal device communicates with the network device through transmission resources (for example, frequency domain resources, or spectrum resources) used by the cell. The cell may correspond to the network device (e.g., base station). The cell may belong to a macro base station or a base station corresponding to a small cell. The small cell may include: metro cell, micro cell, pico cell, femto cell, etc. These small cells have the characteristics of small coverage area and low transmit power, and are suitable for providing high speed data transmission services.

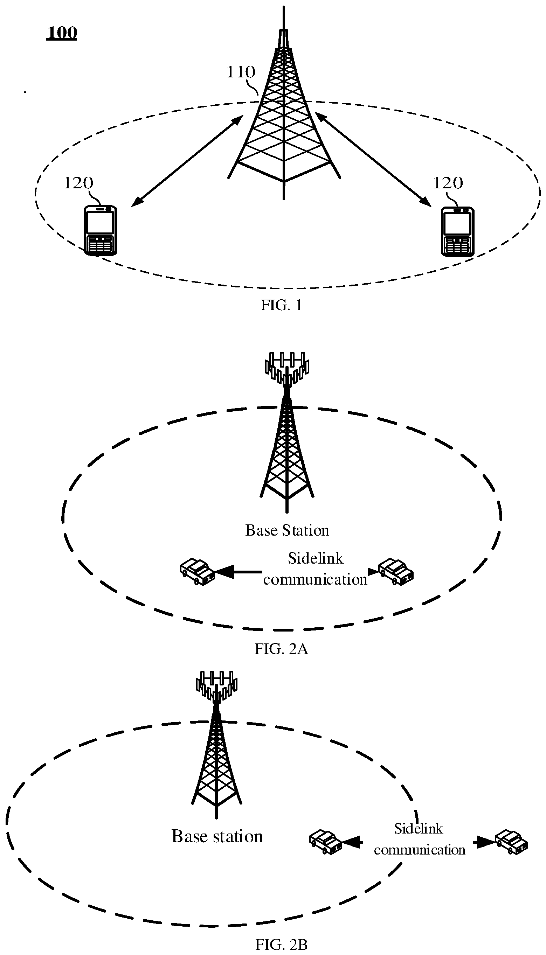

FIG. 1 exemplarily illustrates one network device 110 and two terminal devices 120. In some embodiments, the wireless communication system 100 may include multiple network devices 110, and the coverage of each network device 110 may include other numbers of terminal devices 120, without limitation in the embodiments. The embodiments of the present disclosure may be applied to a terminal device 120 with a network device 110, or to a terminal device 120 with another terminal device 120.

In some embodiments, the wireless communication system 100 may further include other network entities such as mobility management entity (MME), access and mobility management function (AMF), etc., which is not limited herein.

It can be understood that the terms "system" and "network" in the specification are often used interchangeably. The term "and/or" is only an association relationship describing associated objects, which means that there may be three kinds of relationships. For example, A and/or B indicates: the existence of A alone, the existence of both A and B, and the existence of B alone. In addition, the character "P' generally indicates that the front and back associated objects are in an "or" relationship.

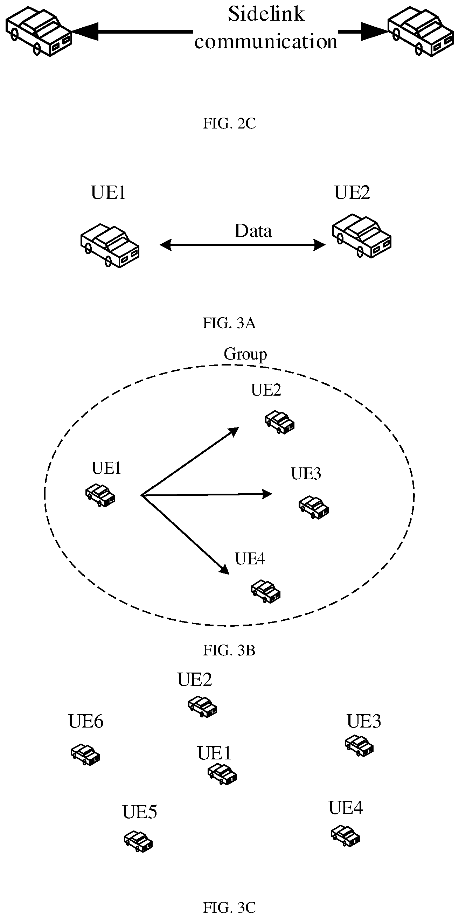

According to a network coverage of a terminal performing the sidelink communication, the sidelink communication may be divided into a sidelink communication within a network coverage, a sidelink communication partially within a network coverage, and a schematic view of a sidelink communication outside a network coverage, as shown in FIGS. 2A, 2B, and 2C.

In the sidelink communication within a network coverage, all terminals performing the sidelink communication are located within a coverage of the same base station. Therefore, the terminals can perform the sidelink communication based on the same sidelink configuration by receiving a configuration signaling of the base station.

In the sidelink communication partially within a network coverage, part of the terminals performing the sidelink communication are located within the coverage of the base station, and this part of the terminals can receive the configuration signaling of the base station and perform the sidelink communication according to the configuration of the base station. While the other part of the terminals located outside the network coverage cannot receive the configuration signaling of the base station. In this case, the terminals outside the network coverage determine the sidelink configuration based on pre-configuration information and information carried in a physical sidelink broadcast channel (PSBCH) transmitted by the terminals located within the network coverage, thereby performing the sidelink communication.

In the sidelink communication outside a network coverage, all terminals performing the sidelink communications are located outside the network coverage, and all the terminals determine the sidelink configuration based on pre-configuration information to perform the sidelink communication.

Vehicle to everything (V2X) systems adopt a direct terminal-to-terminal communication. In the 3rd generation partnership project (3GPP) protocol, the V2X has two transmission modes: a first mode and a second mode.

The first mode: transmission resources of the terminal are allocated by the network, such as the base station. The terminal transmits data on a sidelink according to resources allocated by the base station; the base station may allocate resources for a single transmission to the terminal, or allocate resources for semi-static transmission to the terminal. As shown in FIG. 2A, the terminal is located within the network coverage, and the network allocates the transmission resources for sidelink transmission to the terminal.

The second mode: the terminal selects a resource in a resource pool for data transmission. As shown in FIG. 2C, the terminal is located outside the coverage of the cell, and the terminal autonomously selects a transmission resource from a pre-configured resource pool for sidelink transmission. Alternatively, as shown in FIG. 2A, the terminal autonomously selects a transmission resource for sidelink transmission in a resource pool configured in the network.

In long term evolution (LTE)-V2X, broadcast transmission is supported; in NR-V2X, unicast transmission and multicast transmission are introduced. FIGS. 3A, 3B, and 3C are schematic views of unicast, multicast, and broadcast transmission modes, respectively. For unicast transmission, there is only one terminal at the receiving end. As shown in FIG. 3A, the unicast transmission is performed between UE1 and UE2. For multicast transmission, the receiving end is all terminals in a communication group, or all terminals within a certain transmission distance. As shown in FIG. 3B, UE1, UE2, UE3, and UE4 form a communication group, where UE1 transmits data, and other terminals in the group are all receiving end terminals. For broadcast transmission, the receiving end is any terminal around the transmitting end terminal. As shown in FIG. 3C, UE1 is the transmitting end terminal, and other terminals around UE1, i.e., UE2-UE6, are all receiving end terminals.

The sidelink resource allocation method proposed in the embodiments of the present disclosure may be applied to the foregoing unicast, multicast, and broadcast transmission modes.

In the sidelink transmission, when there is a central control node (such as a group head terminal in multicast communication), the central control node may have one of the following functions: establishment and maintenance of communication groups, joining and leaving of group members, allocation, coordination, and scheduling of transmission resources, and other communication groups' resource coordination functions, etc. The central control node may allocate sidelink transmission resources to other terminals. The embodiments of the present disclosure may be applied to a central control node to allocate sidelink transmission resources to other nodes, but the above does not constitute a limitation to the present disclosure.

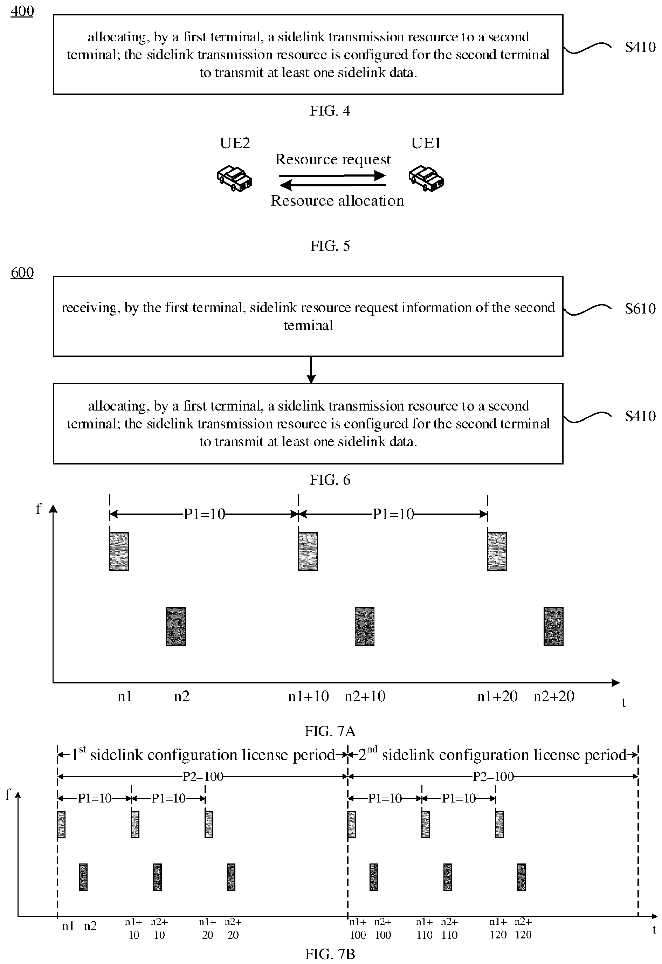

FIG. 4 is a flowchart of a sidelink resource allocation method 400 according to an embodiment of the present disclosure. In some embodiments, the method may be applied to the system shown in FIG. 1, but the above does not constitute a limitation to the present disclosure. The method includes at least the following operations at blocks illustrated in FIG. 4.

At block S410: allocating, by a first terminal, a sidelink transmission resource to a second terminal; the sidelink transmission resource is used for the second terminal to transmit at least one sidelink data.

In some embodiments, the first terminal transmits resource indication information of the sidelink transmission resource to the second terminal. The resource indication information is used to determine the sidelink transmission resource allocated to the second terminal.

For example, as shown in FIG. 5, the communication group includes a first terminal UE1 and a second terminal UE2. The second terminal UE2 may transmit a resource request to the first terminal UE1, and the first terminal UE1 transmits the resource indication information of the sidelink transmission resource to the second terminal UE2, so as to allocate the sidelink transmission resource to the second terminal UE2. The second terminal UE2 may transmit data with the sidelink transmission resource, for example, transmit sidelink data to the first terminal UE1.

In some embodiments, the first terminal dynamically allocates the sidelink transmission resource to the second terminal, and the sidelink transmission resource may be used for the second terminal to transmit one sidelink data (or sidelink data block). In the following embodiments, the sidelink data and the sidelink data block may refer to the same content.

In some embodiments, the first terminal allocates N2 sidelink transmission resources to the second terminal, where N2 is a positive integer; the first terminal transmits the resource indication information of the N2 sidelink transmission resources to the second terminal. The resource indication information includes at least one of the following.

Time domain indication information, used to determine a time domain location of the N2 sidelink transmission resources.

Frequency domain indication information, used to determine a frequency domain location and size of the N2 sidelink transmission resources.

In some embodiments, the first terminal allocates M3 sidelink transmission resources to the second terminal; the first terminal transmits resource indication information of the M3 sidelink transmission resources to the second terminal. The resource indication information includes at least one of the following.

Time domain indication information, used to determine a time domain location of the N3 sidelink transmission resources.

Frequency domain indication information, used to determine a frequency domain location and size of the N3 sidelink transmission resources.

A first periodicity parameter, used to determine a periodicity of repetition of the N3 sidelink transmission resources in the time domain.

The number of repetitions K3, used to determine the number of repetitions of the N3 sidelink transmission resources in the time domain.

Among them, M3 and N3 are positive integers, K3 is an integer, and M3=N3×(K3+1).

When K3 is not included in the resource indication information, the default number of repetitions of the N3 sidelink transmission resources is 0, that is, there is no repetition.

In some embodiments, the N2 or M3 sidelink transmission resources are used for the second terminal to transmit the same sidelink data. For example, a first sidelink transmission resource in the N2 or M3 sidelink transmission resources is used for the second terminal to transmit a sidelink data for the first time, and the subsequent sidelink transmission resources are used for the second terminal to retransmit the sidelink data.

In other embodiments, the first terminal allocates a semi-static sidelink transmission resource to the second terminal, and the semi-static sidelink transmission resource may transmit multiple sidelink data.

In some embodiments, the sidelink transmission resource includes at least one set of sidelink configured grant transmission resources.

The at least one set of sidelink configured grant transmission resources is used for the second terminal to transmit multiple sidelink data.

In some embodiments, each set of sidelink configured grant transmission resources includes periodic sidelink transmission resources, and each period includes M1 sidelink transmission resources.

The resource indication information for each set of sidelink configured grant transmission resources includes at least one of the following.

Time domain indication information, used to determine a time domain location of N1 sidelink transmission resources.

Frequency domain indication information, used to determine a frequency domain location and size of the N1 sidelink transmission resources.

A first periodicity parameter, used to determine a periodicity of repetition of the N1 sidelink transmission resources in the time domain.

The number of repetitions K1, used to determine the number of repetitions of the N1 sidelink transmission resources in the time domain.

A second periodicity parameter, used to determine a sidelink configured grant period of the sidelink configured grant transmission resources.

Among them, M1 and N1 are positive integers, K1 is an integer, and M1=N1×(K1+1).

In some embodiments, when K1 is not included in the resource indication information, the default number of repetitions of the N1 sidelink transmission resources is 0, that is, there is no repetition. The N1 sidelink transmission resources are included in each sidelink configured grant period.

In some embodiments, when the second periodicity parameter is not included in the resource indication information, by default the sidelink configured grant transmission resource includes one period of sidelink transmission resources.

In some embodiments, in the sidelink configured grant transmission resource, the sidelink transmission resources of the same sidelink configured grant period are used for the second terminal to transmit the same sidelink data. For example, a sidelink configured grant period includes M1 sidelink transmission resources, where a first sidelink transmission resource is used for the second terminal to transmit a sidelink data for the first time, and the subsequent sidelink transmission resources are used for the second terminal to retransmit the sidelink data.

In some embodiments, in the sidelink configured grant transmission resource, the sidelink transmission resources of different sidelink configured grant periods are used for the second terminal to transmit different or the same sidelink data.

In some embodiments, the first periodicity parameter/second periodicity parameter may be represented by the number of slots, and in some embodiments, represented by the number of logical slots.

In some embodiments, the first terminal transmits the resource indication information and transmission parameters of the sidelink transmission resource to the second terminal. The resource indication information and transmission parameters of the sidelink transmission resource are carried in the same or different signaling.

For the sidelink configured grant transmission resource, in some embodiments, the first terminal transmits the resource indication information, transmission parameters, and activation information of the sidelink transmission resource to the second terminal. The resource indication information, transmission parameters, and activation information of the sidelink transmission resource are carried in at least two signalings.

In some embodiments, the transmission parameters are carried in a first signaling, and the resource indication information and activation information of the sidelink transmission resource are carried in a second signaling.

In some embodiments, the transmission parameters and the resource indication information of the sidelink transmission resource are carried in a first signaling, and the activation information is carried in a second signaling.

In some embodiments, the transmission parameters are carried in a first signaling, the resource indication information of the sidelink transmission resource is carried in a second signaling, and the activation information is carried in a third signaling.

In some embodiments, the first terminal transmits deactivation information to the second terminal. The deactivation information is used to deactivate the sidelink configured grant transmission resource.

In some embodiments, the activation information includes an index of the sidelink configured grant transmission resources, which is used to activate the sidelink configured grant transmission resources corresponding to the index.

In some embodiments, the deactivation information includes an index of the sidelink configured grant transmission resources, which is used to deactivate the sidelink configured grant transmission resources corresponding to the index.

In some embodiments, the second signaling is transmitted after the first signaling, and the second terminal uses the sidelink transmission data allocated by the first terminal only after receiving the activation information in the second signaling.

In some embodiments, the second signaling includes: first-stage sidelink control information (SCI), second-stage SCI, or media access control (MAC) control element (CE). That is, the activation/deactivation information may be carried in the SCI (including the first-stage SCI and the second-stage SCI) or the MAC CE of the sidelink data.

The resource indication information may be transmitted in the following ways.

In some embodiments, the first terminal transmitting the resource indication information of the sidelink transmission resource to the second terminal includes: transmitting, by the first terminal, a physical sidelink control channel (PSCCH) to the second terminal; the PSCCH carries the first-stage SCI, the first-stage SCI including the resource indication information of the sidelink transmission resource.

In some embodiments, the first terminal transmitting the resource indication information of the sidelink transmission resource to the second terminal includes: transmitting, by the first terminal, the second-stage SCI to the second terminal; the second-stage SCI includes the resource indication information of the sidelink transmission resource.

In some embodiments, the first terminal transmits a PSCCH/physical sidelink shared channel (PSSCH) to the second terminal, and the transmission resource of the PSSCH includes a transmission resource used to transmit the second-stage SCI. In some embodiments, when the first terminal allocates sidelink transmission resource to the second terminal, sidelink data is not transmitted, that is, the transmission resource of the PSSCH is only used to transmit the second-stage SCI (and reference signals, such as PSSCH DMRS, CSI-RS, etc.) but not to transmit PSSCH.

In some embodiments, first indication information is carried in the first-stage SCI or the second-stage SCI, and the first indication information is used to determine whether to transmit sidelink data, for example, to indicate whether sidelink data is transmitted in the transmission resource of the PSSCH.

In some embodiments, the first terminal transmitting the resource indication information of the sidelink transmission resource to the second terminal includes: transmitting, by the first terminal, a PSSCH to the second terminal; the PSSCH carries sidelink data, and a MAC CE of the sidelink data includes the resource indication information of the sidelink transmission resource.

In some embodiments, second indication information is carried in the first-stage SCI or the second-stage SCI, and the second indication information is used to determine whether the MAC CE of the sidelink data includes the resource indication information of the sidelink transmission resource.

In some embodiments, the second indication information is carried by an information filed in the first-stage SCI or the second-stage SCI and/or a radio network temporary identity (RNTI).

In some embodiments, the first terminal transmitting the resource indication information of the sidelink transmission resource to the second terminal includes: transmitting, by the first terminal, a PC5-radio resource control (RRC) signaling to the second terminal; the PC5-RRC signaling includes the resource indication information of the sidelink transmission resources.

In addition, in the embodiments of the present disclosure, there may be a certain time interval between the sidelink transmission resource allocated by the first terminal to the second terminal and the resource indication information. In some embodiments, a time interval between a slot in which the first sidelink transmission resource in the sidelink transmission resource is located and a slot in which a signaling carrying the resource indication information of the sidelink transmission resource is located is greater than a first value.

In some embodiments, the first value is determined in at least one of the following manners: pre-configured, network configured, and determined according to a processing capability of the second terminal.

In the case of determining the first value according to the processing capability of the second terminal, in some embodiments, the present disclosure further include: receiving, by the first terminal, capability indication information transmitted by the second terminal; the capability indication information is used to determine the processing capacity of the second terminal.

FIG. 6 is a flowchart of a sidelink resource allocation method 600 according to another embodiment of the present disclosure. As shown in FIG. 6, in some embodiments, before step S410, the method further includes: S610: receiving, by the first terminal, sidelink resource request information of the second terminal.

After receiving the sidelink resource request information of the second terminal, the first terminal transmits the resource indication information of the sidelink transmission resource to the second terminal, and allocates the sidelink transmission resource to the second terminal. The second terminal may use the sidelink transmission resource to transmit the sidelink data.

In the following, in conjunction with the accompanying drawings, specific embodiments are provided to introduce the sidelink resource allocation method of the present disclosure in detail.

### Embodiment 1-1.

In this embodiment, the first terminal allocates a sidelink transmission resource to the second terminal, and the sidelink transmission resource is used for the second terminal to transmit one sidelink data block.

For example, the first terminal allocates M (M≥1) sidelink transmission resources to the second terminal, and the M sidelink transmission resources are used for the second terminal to transmit one sidelink data block, including transmitting for the first time and retransmitting (when M> 1).

In this embodiment, the first terminal transmits resource indication information of the sidelink transmission resource to the second terminal, and the resource indication information may be carried in SCI, MAC CE, or PC5-RRC signaling. The specific carrying method will be described in detail in Embodiments 2-1 and 2-4.

In this embodiment, a time interval between a slot in which a first sidelink transmission resource of the M sidelink transmission resources is located and a slot in which a signaling of the resource indication information of the sidelink transmission resources is located is greater than A slots (where A is a positive integer). Among them, the parameter A is pre-configured or network-configured, or determined according to a processing capability of the second terminal (in this case, the second terminal is required to transmit information about its processing capability to the first terminal).

For example, when the second terminal has sidelink data to be transmitted, the second terminal transmits resource request information to the first terminal and transmits its processing capability to the first terminal, for example, A=2. The first terminal allocates three sidelink transmission resources to the second terminal. The resource indication information of the three sidelink transmission resources is carried in the second-stage SCI. The time interval between the slot in which the first allocated sidelink transmission resource is located and the slot in which the second-stage SCI is located is 5 slots, which is greater than A slots. The second terminal transmits sidelink data with the 3 sidelink transmission resources, including 1 first transmission and 2 retransmissions.

### Embodiment 1-2.

The first terminal allocates sidelink transmission resources to the second terminal, and the sidelink transmission resources are used for the second terminal to transmit multiple sidelink data blocks.

In this embodiment, the first terminal allocates a semi-static transmission resource to the second terminal, and the semi-static transmission resource includes multiple sidelink transmission resources for the second terminal to transmit multiple sidelink data.

In this embodiment, the first terminal allocates a sidelink configured grant transmission resource to the second terminal, and the sidelink configured grant transmission resource includes periodic transmission resources. Specifically, the first terminal may allocate a type-1 or a type-2 sidelink configured grant transmission resource to the second terminal.

For type-1 sidelink configured grant transmission resource: the first terminal transmits information such as resource indication information and transmission parameters of the sidelink transmission resource to the second terminal. For example, the resource indication information and the transmission parameter information are carried in one signaling, and the second terminal may use the allocated sidelink transmission resource to perform data transmission after receiving the signaling. For another example, the resource indication information and the transmission parameter information are carried in different signalings, and all signalings may be transmitted to the second terminal in the same slot.

For type-2 sidelink configured grant transmission resource: the first terminal carries information such as resource indication information, transmission parameters, and activation (or deactivation) information of the sidelink transmission resource in at least two signalings and transmits the information to the second terminal. In some embodiments, the at least two signalings are transmitted to the second terminal in different slots.

For example, the first signaling includes transmission parameters; the second signaling includes transmission resource indication information, and the second signaling includes activation (or deactivation) information for activating (or deactivating) the sidelink configured grant transmission resource.

For another example, the first signaling includes transmission parameters and transmission resource indication information; the second signaling includes activation (or deactivation) information for activating (or deactivating) the sidelink configured grant transmission resource.

The second signaling is transmitted after the first signaling, and the second terminal may use the sidelink transmission resource only after receiving the activation signaling;

In some embodiments, the activation (or deactivation) signaling may be carried in SCI (including first-stage SCI and second-stage SCI), MAC CE.

In some embodiments, the activation (or deactivation) signaling includes an index of the sidelink configured grant. For example, the first terminal allocates multiple sets of sidelink configured grants to the second terminal, and the signaling for activating (or deactivating) the sidelink configured grant includes an index of the sidelink configured grant, which is used to indicate the sidelink configuration corresponding to the index to be activated (or deactivated).

### Embodiment 2:

Referring to FIG. 5, the second terminal (UE2, group member) transmits resource request information to the first terminal (UE1, central control node or group head terminal), and the first terminal allocates a sidelink transmission resource to the second terminal. The resource indication information of the sidelink transmission resource may be transmitted in the following ways.

### Embodiment 2-1.

The first terminal transmits a second-stage SCI, which carries resource indication information of the sidelink transmission resource. The resource indication information of the sidelink transmission resource is used to determine the sidelink transmission resource allocated to the second terminal.

When the first terminal needs to allocate the sidelink transmission resource to the second terminal, the first terminal transmits a PSCCH/PSSCH to the second terminal, and the transmission resource of the PSSCH includes a transmission resource for transmitting the second-stage SCI. In the related art, the second-stage SCI is used to carry parameters for detecting the PSSCH, such as sidelink feedback indication information, source identification, destination identification, hybrid automatic repeat request (HARQ) process number, redundancy version, new data indication, etc. When the first terminal allocates the sidelink transmission resource to the second terminal, the second-stage SCI may include resource indication information of the sidelink transmission resource, which is used to determine the sidelink transmission resource allocated to the second terminal.

The first-stage SCI (1st SCI) and the second-stage SCI (2nd SCI) are two stages of sidelink control information introduced in NR-V2X. Among them, the first-stage SCI is carried in the PSCCH and is used to transmit information for listening at the receiving end, such as transmission resources of the PSSCH, priority information, reserved resource indication information, MCS, DMRS patterns, number of antenna ports, etc. The second-stage SCI is used to transmit information for demodulating the PSSCH, such as HARQ process ID, new data indicator (NDI), transmitting end ID information, target end ID information, sidelink feedback indication information, etc. The second-stage SCI and PSSCH are transmitted together, and are mapped around a PSSCH DMRS symbol. The second-stage SCI is demodulated according to the PSSCH DMRS.

In some embodiments, when the first terminal allocates the sidelink transmission resource to the second terminal, sidelink data is not transmitted, that is, the transmission resource of the PSSCH is only used to transmit the second-stage SCI (and reference signals, such as PSSCH DMRS, CSI-RS, etc.) but not to transmit PSSCH.

In some embodiments, indication information is included in the first-stage SCI or the second-stage SCI for indicating whether to transmit sidelink data, or for indicating that only the second-stage SCI is transmitted.

For example, one bit is included in the first-stage SCI or the second-stage SCI. When the bit value is 1, it is indicated that the transmission resource of the PSSCH includes PSSCH, that is, the sidelink data is transmitted; when the bit value is 0, it is indicated the PSSCH is not included in the transmission resource of the PSSCH, that is, the sidelink data is not transmitted.

For another example, one bit is included in the first-stage SCI or the second-stage SCI. When the bit value is 1, it is indicated that only the second-stage SCI is included in the transmission resource of the PSSCH; when the bit value is 0, it is indicated that both the second-stage SCI and PSSCH are included in the transmission resource of the PSSCH.

### Embodiment 2-2.

The resource indication information of the sidelink transmission resource allocated by the first terminal to the second terminal is included in the first-stage SCI.

The first-stage SCI is carried by the PSCCH, and the first-stage SCI is used to indicate the transmission resource of the PSSCH scheduled by the PSCCH. In some embodiments, the first-stage SCI includes resource indication information used for the sidelink transmission resource allocated to the second terminal.

In some embodiments, when the resource indication information of the sidelink transmission resource allocated by the first terminal to the second terminal is carried in the first-stage SCI, the first terminal only transmits the first-stage SCI, that is, PSCCH, and do not transmit the PSSCH related to the SCI. That is, the first terminal allocates the sidelink transmission resource to the second terminal only by transmitting the first-stage SCI, and does not transmit sidelink data to the second terminal, nor does it transmit the second-stage SCI to the second terminal.

### Embodiment 2-3.

The resource indication information of the sidelink transmission resource allocated by the first terminal to the second terminal is included in a MAC CE.

The first terminal transmits the PSCCH/PSSCH to the second terminal, and the MAC CE of the sidelink data carried by the PSSCH includes the resource indication information of the sidelink transmission resource allocated by the first terminal to the second terminal.

n some embodiments, indication information is included in the first-stage SCI or the second-stage SCI, and the indication information is used to determine that the MAC CE of the sidelink data includes the resource indication information of the sidelink transmission resource. In some embodiments, the indication information may be carried by an information filed in the first-stage SCI or the second-stage SCI, or carried by a radio network temporary identity (RNTI).

### Embodiment 2-4.

The resource indication information of the sidelink transmission resource allocated by the first terminal to the second terminal is included in a PC5-radio resource control (RRC) signaling.

When there is a PC5-RRC signaling interaction between the first terminal and the second terminal, the first terminal may allocate the sidelink transmission resource to the second terminal through the PC5-RRC signaling.

It can be understood that, in Embodiment 1-1, the resource indication information of the sidelink transmission resource allocated by the first terminal to the second terminal may be carried in the manners of these embodiments (Embodiment 2-1 to Embodiment 2-4).

In Embodiment 1-2, the type-1 sidelink configured grant transmission resource allocated by the first terminal to the second terminal may be carried in the manners of these embodiments (Embodiment 2-1 to Embodiment 2-4).

In the embodiment 1-2, the type-2 sidelink configured grant transmission resource allocated by the first terminal to the second terminal, the first signaling, and the second signaling may be carried in the manners of these embodiments (Embodiment 2-1 to Embodiment 2-4). The first signaling and the second signaling may be carried in the same manner (for example, the first signaling and the second signaling are carried by the second-stage SCI), or the first signaling and the second signaling may be carried in different manners (for example, the first signaling is carried by the second-stage SCI, and the first signaling is carried by the first-stage SCI).

### Embodiment 3.

The first terminal allocates a sidelink transmission resource to the second terminal, and the resource indication information of the sidelink transmission resource includes at least one of the following information.

Time domain resource indication, used to determine a time domain location of the sidelink transmission resource allocated to the second terminal.

Frequency domain resource indication, used to determine a frequency domain location and size of the sidelink transmission resource allocated to the second terminal.

A first periodicity parameter P1, used to determine a periodicity of repetition of N transmission resources in the time domain.

The number of repetitions K, used to determine the number of repetitions of the N transmission resources in the time domain.

The first periodicity parameter P1 may be represented by the number of slots, and further, may be represented by the number of logical slots.

When the first terminal needs to allocate the sidelink transmission resource to the second terminal, the first terminal transmits the resource indication information of the sidelink transmission resource to the second terminal in the manners in Embodiment 2. The resource indication information of the sidelink transmission resource includes at least one of the following information.

Time domain resource indication, used to determine a time domain location of the sidelink transmission resource allocated to the second terminal.

Frequency domain resource indication, used to determine a frequency domain location and size of the sidelink transmission resource allocated to the second terminal.

The sidelink transmission resources allocated by the first terminal to the second terminal may be determined through the above resource indication information, and the N sidelink transmission resources may be determined according to the resource indication information. For example, in a case where the resource indication information follows the current method of indicating sidelink transmission resources in the first-stage SCI, the N (N<3) sidelink transmission resources may be indicated, and the N sidelink transmission resources are used for transmitting the same sidelink data block (including the first transmission and/or retransmission). For example, when N=1, the N sidelink transmission resource is only used for the first transmission; when N=2, the N sidelink transmission resources are used for the first transmission and a retransmission; when N=3, the N sidelink transmission resources are used for the first transmission and 2 retransmissions. However, considering that on unlicensed spectrum, the second terminal needs to perform listen before talk (LBT) to determine if it can access a channel when using each allocated sidelink transmission resource; if the LBT is unsuccessful, the channel cannot be accessed, and the transmission resource cannot be used, which will result in the reduction of sidelink transmission resources that the second terminal can use. When the channel is congested, there may be even a situation where the terminal cannot use the allocated sidelink transmission resource because of multiple unsuccessful LBTs. Therefore, in order to reduce the probability of unsuccessful LBT causing the second terminal to have no resources available, the first terminal may allocate M (M≥N) transmission resources to the second terminal. Specifically, the M transmission resources may be allocated to the second terminal in the following manners.

The N transmission resources may be determined through the time domain resource indication and frequency domain resource indication. The resource indication information of the sidelink transmission resource may further include the following information for determining the M transmission resources.

A first periodicity parameter P1, used to determine a periodicity of repetition of the N transmission resources in the time domain. The parameter P1 may be represented by the number of slots, and further, may be represented by the number of logical slots.

The number of repetitions K, used to determine the number of repetitions of the N transmission resources in the time domain.

The above information may determine the M sidelink transmission resources, M=N×(K+1).

The number of repetitions K is optional. When the parameter K is not included in the resource indication information, K=0 by default, that is, the N transmission resources are not repeated in the time domain.

FIG. 7A is a schematic view of a determined sidelink resource allocation according to Embodiment 3 of the present disclosure. As shown in FIG. 7A, two sidelink transmission resources may be determined through the time domain resource indication and the frequency domain resource indication, which are located in slots n1 and n2, respectively. In addition, the first terminal indicates in the SCI that the first periodicity parameter P1=10 and the number of repetitions K=2, that is, the sidelink transmission resources of the slots n1 and n2 will be repeated twice in the period P1. It can be determined that the additional 4 sidelink transmission resources are located at nl+10, n2+10, nl+20, n2+20; that is, the sidelink transmission resource at the slot (n1+10) and the sidelink transmission resource at the slot (n1+20) are two repetitions of the sidelink transmission resource at the slot n1, that is, the three sidelink transmission resources have the same frequency domain resource; the sidelink transmission resource at the slot (n2+10) and the sidelink transmission resource at the slot (n2+20) are two repetitions of the sidelink transmission resource at the slot n2, that is, the three sidelink transmission resources have the same frequency domain resource.

In some embodiments, the N (or M) sidelink transmission resources determined in the foregoing manners are used for the second terminal to transmit one sidelink data block, that is, the N or M sidelink transmission resources may only be used for the first transmission and/or retransmission of the sidelink data block and cannot be used for the transmission of a different sidelink data block.

In some embodiments, the N (or M) sidelink transmission resources determined in the foregoing manners are transmission resources within one period of the sidelink configured grant transmission resource, and indication information of the sidelink configured grant resource further includes the following.

A second periodicity parameter P2, used to determine a period of the sidelink configured grant transmission resources.

In some embodiments, transmission resources in the same sidelink configured grant period can only transmit the same sidelink data block. Transmission resources in different sidelink configured grant periods can transmit different sidelink data blocks.

FIG. 7B is another schematic view of a determined sidelink resource allocation according to Embodiment 3 of the present disclosure. Based on the embodiments illustrated in FIG. 7A, when the first terminal allocates the transmission resources licensed by the sidelink configuration to the second terminal, the first terminal includes the second periodicity parameter P2=100 in the resource indication information, for configuring the period of the sidelink configured grant. As shown in FIG. 7B, FIG. 7B shows two sidelink configured grant periods. In each sidelink configured grant period, the method in the corresponding embodiments in FIG. 7A may be adopted to determine six sidelink transmission resources in the sidelink configured grant period. The six transmission resources are used to transmit the same sidelink data block, and the sidelink transmission resources in the two sidelink configured grant periods may be used to transmit different sidelink data blocks.

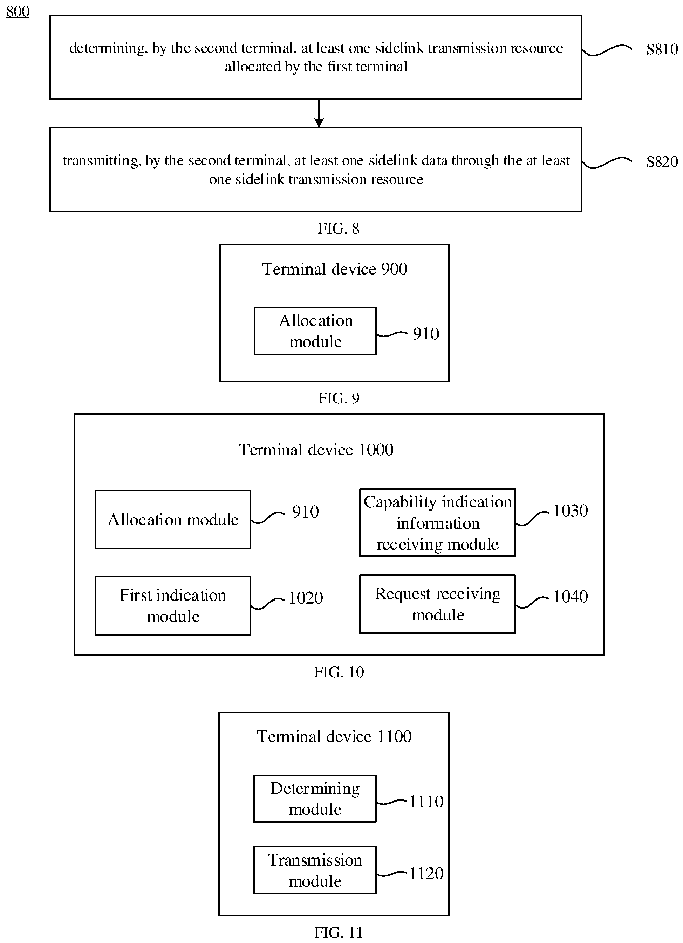

The embodiments of the present disclosure further propose a sidelink resource allocation method, which may be applied to the above second terminal. FIG. 8 is a flowchart of a sidelink resource allocation method 800 according to further another embodiment of the present disclosure.

At block S810: determining, by the second terminal, at least one sidelink transmission resource allocated by the first terminal.

At block S820: transmitting, by the second terminal, at least one sidelink data through the at least one sidelink transmission resource.

In some embodiments, the determining, by the second terminal, at least one sidelink transmission resource allocated by the first terminal includes operations as followed.

Receiving, by the second terminal, resource indication information of the at least one sidelink transmission resource.

Determining the at least one sidelink transmission resource allocated by the first terminal to the second terminal according to the resource indication information of the at least one sidelink transmission resource.

In some embodiments, the at least one sidelink transmission resource includes at least one set of sidelink configured grant transmission resources.

The second terminal uses the at least one set of sidelink configured grant transmission resources to transmit multiple sidelink data.

In some embodiments, the second terminal receives resource indication information and transmission parameters of the at least one sidelink transmission resource from the first terminal; the resource indication information and transmission parameters of the at least one sidelink transmission resource are carried in the same or different signaling.

In some embodiments, the second terminal receives resource indication information, transmission parameters, and activation information of the at least one sidelink transmission resource from the first terminal and transmits the above to the second terminal; the resource indication information, transmission parameters, and activation information of the at least one sidelink transmission resource are carried in at least two signalings.

In some embodiments, the transmission parameters are carried in a first signaling, and the resource indication information and activation information of the at least one sidelink transmission resource are carried in a second signaling.

In some embodiments, the transmission parameters and the resource indication information of the at least one sidelink transmission resource are carried in a first signaling, and the activation information is carried in a second signaling.

In some embodiments, the transmission parameters are carried in a first signaling, the resource indication information of the at least one sidelink transmission resource is carried in a second signaling, and the activation information is carried in a third signaling.

In some embodiments, the first terminal transmits deactivation information to the second terminal, and the deactivation information is used to deactivate the sidelink configured grant transmission resource.

In some embodiments, the activation information includes an index of the sidelink configured grant transmission resources, which is used to activate the sidelink configured grant transmission resources corresponding to the index.

In some embodiments, the deactivation information includes an index of the sidelink configured grant transmission resources, which is used to deactivate the sidelink configured grant transmission resources corresponding to the index.

In some embodiments, the second signaling is transmitted after the first signaling.

In some embodiments, the second signaling includes: first-stage sidelink control information SCI, second-stage SCI, or MAC CE of sidelink data.

In some embodiments, the second terminal receiving the resource indication information of the sidelink transmission resource includes: receiving, by the second terminal, a physical sidelink control channel (PSCCH); the PSCCH carries the first-stage SCI, the first-stage SCI including the resource indication information of the sidelink transmission resource.

In some embodiments, the second terminal receiving the resource indication information of the sidelink transmission resource includes: receiving, by the second terminal, the second-stage SCI; the second-stage SCI includes the resource indication information of the sidelink transmission resource.

In some embodiments, the method further includes: receiving the first indication information carried in the first-stage SCI or the second-stage SCI, and determining whether to transmit the sidelink data according to the first indication information.

In some embodiments, the second terminal receiving the resource indication information of the sidelink transmission resource includes: receiving, by the second terminal, a physical sidelink shared channel (PSSCH); the PSSCH carries sidelink data, and a MAC CE of the sidelink data includes the resource indication information of the sidelink transmission resource.

In some embodiments, the method further includes: carrying second indication information in the first-stage SCI or the second-stage SCI, and the second indication information is used to determine whether the MAC CE of the sidelink data includes the resource indication information of the sidelink transmission resource.

In some embodiments, the second indication information is carried by an information filed in the first-stage SCI or the second-stage SCI and/or a radio network temporary identity (RNTI).

In some embodiments, the second terminal receiving the resource indication information of the sidelink transmission resource includes: receiving, by the second terminal, a PC5-radio resource control (RRC) signaling; the PC5-RRC signaling includes the resource indication information of the sidelink transmission resource.

In some embodiments, each set of sidelink configured grant transmission resources includes periodic sidelink transmission resources, and each period includes M1 sidelink transmission resources.

The resource indication information for each set of sidelink configured grant transmission resources includes at least one of the following.

Time domain indication information, used to determine a time domain location of the N1 sidelink transmission resources.

Frequency domain indication information, used to determine a frequency domain location and size of the N1 sidelink transmission resources.

A first periodicity parameter, used to determine a periodicity of repetition of the N1 sidelink transmission resources in the time domain.

The number of repetitions K1, used to determine the number of repetitions of the N1 sidelink transmission resources in the time domain.

A second periodicity parameter, used to determine a sidelink configured grant period of the sidelink configured grant transmission resources.

Among them, the M1 and N1 are positive integers, the K1 is an integer, and the M1=N1×(K1+1).

In some embodiments, when K1 is not included in the resource indication information, the default number of repetitions of N1 sidelink transmission resources is 0, that is, there is no repetition. The N1 sidelink transmission resources are included in each sidelink configured grant period.

In some embodiments, when the second periodicity parameter is not included in the resource indication information, by default the sidelink configured grant transmission resource includes one period of sidelink transmission resource.

In some embodiments, in the sidelink configured grant transmission resource, the sidelink transmission resources of the same sidelink configured grant period are used for the second terminal to transmit the same sidelink data.

In some embodiments, in the sidelink configured grant transmission resource, sidelink transmission resources of different sidelink configured grant periods are used for the second terminal to transmit different or the same sidelink data.

In some embodiments, the first terminal allocates N2 sidelink transmission resources to the second terminal, and N2 is a positive integer.

The resource indication information of the sidelink transmission resource includes at least one of the following.

Time domain indication information, used to determine a time domain location of the N2 sidelink transmission resources.

Frequency domain indication information, used to determine a frequency domain location and size of the N2 sidelink transmission resources.

In some embodiments, the first terminal allocates sidelink transmission resources to the second terminal.

The resource indication information of the sidelink transmission resource includes at least one of the following.

Time domain indication information, used to determine a time domain location of the N3 sidelink transmission resources.

Frequency domain indication information, used to determine a frequency domain location and size of the N3 sidelink transmission resources.

A first periodicity parameter, used to determine a periodicity of repetition of the N3 sidelink transmission resources in the time domain.

The number of repetitions K3, used to determine the number of repetitions of the N3 sidelink transmission resources in the time domain.

Among them, M3 and N3 are positive integers, K3 is an integer, and the M3=N3×(K3+1).

When K3 is not included in the resource indication information, the default number of repetitions of N3 sidelink transmission resources is 0, that is, there is no repetition.

In some embodiments, the second terminal uses the N2 or M3 sidelink transmission resources to transmit the same sidelink data.

In some embodiments, the first periodicity parameter or the second periodicity parameter is represented by the number of slots.

In some embodiments, the slot is a logical slot.

In some embodiments, a time interval between a slot in which a first sidelink transmission resource in the sidelink transmission resource is located and a slot in which a signaling carrying the resource indication information of the sidelink transmission resource is located is greater than a first value.

In some embodiments, the first value is determined in at least one of the following manners: pre-configured, network configured, and determined according to a processing capability of the second terminal.

In some embodiments, the method further includes: transmitting, by the second terminal, capability indication information to the first terminal; the capability indication information is used to determine the processing capability of the second terminal.

In some embodiments, the method further includes: transmitting, by the second terminal, sidelink resource request information to the first terminal.

The embodiments of the present disclosure further propose a terminal device. FIG. 9 is a structural schematic view of a terminal device 900 according to an embodiment of the present disclosure. The terminal device 900 may be the above first terminal and includes components as followed.

An allocation module 910, used to allocate a sidelink transmission resource to a second terminal; the sidelink transmission resource is used for the second terminal to transmit at least one sidelink data.

In some embodiments, the allocation module 910 is used to transmit resource indication information of the sidelink transmission resource to the second terminal; the resource indication information is used to determine the sidelink transmission resource allocated to the second terminal.

In some embodiments, the sidelink transmission resource includes at least one set of sidelink configured grant transmission resources; the at least one set of sidelink configured grant transmission resources is used for the second terminal to transmit multiple sidelink data.

In some embodiments, the allocation module 910 is used to transmit the resource indication information and transmission parameters of the sidelink transmission resource to the second terminal; the resource indication information and transmission parameters of the sidelink transmission resource are carried in the same or different signaling.

In some embodiments, the allocation module 910 is used to transmit the resource indication information, transmission parameters, and activation information of the sidelink transmission resource to the second terminal; the resource indication information, transmission parameters, and activation information of the sidelink transmission resource are carried in at least two signalings.

In some embodiments, the transmission parameters are carried in a first signaling, and the resource indication information and activation information of the sidelink transmission resource are carried in a second signaling.

In some embodiments, the transmission parameters and the resource indication information of the sidelink transmission resource are carried in a first signaling, and the activation information is carried in a second signaling.

In some embodiments, the transmission parameters are carried in a first signaling, the resource indication information of the sidelink transmission resource is carried in a second signaling, and the activation information is carried in a third signaling.

In some embodiments, the first terminal is used to transmit deactivation information to the second terminal; the deactivation information is used to deactivate the sidelink configured grant transmission resource.

In some embodiments, the activation information includes an index of the sidelink configured grant transmission resources, which is used to activate the sidelink configured grant transmission resources corresponding to the index.

In some embodiments, the deactivation information includes an index of the sidelink configured grant transmission resource, which is used to deactivate the sidelink configured grant transmission resource corresponding to the index.

In some embodiments, the second signaling is transmitted after the first signaling.

In some embodiments, the second signaling includes: first-stage sidelink control information (SCI), second-stage SCI, or media access control (MAC) control element (CE) of sidelink data.

In some embodiments, the allocation module 910 is used to transmit a physical sidelink control channel (PSCCH) to the second terminal; the PSCCH carries the first-stage SCI, the first-stage SCI including the resource indication information of the sidelink transmission resource.

In some embodiments, the allocation module 910 is used to transmit the second-stage SCI to the second terminal, the second-stage SCI including the resource indication information of the sidelink transmission resource.

As shown in FIG. 10, the terminal device may further include: a first indication module 1020, used to carry first indication information in the first-stage SCI or the second-stage SCI, and the first indication information is used to determine whether to transmit sidelink data.

In some embodiments, the allocation module 910 is used to transmit a physical sidelink shared channel (PSSCH) to the second terminal; the PSSCH carries sidelink data, and a MAC CE of the sidelink data includes the resource indication information of the sidelink transmission resource.

In some embodiments, the first indication module 1020 is used to carry second indication information in the first-stage SCI or the second-stage SCI, and the second indication information is used to determine whether the resource indication information of the sidelink transmission resource is included in the MAC CE of the sidelink data.

In some embodiments, the second indication information is carried by an information filed in the first-stage SCI or the second-stage SCI and/or a radio network temporary identity (RNTI).

In some embodiments, the allocation module 910 in used to transmit a PC5-radio resource control (RRC) signaling to the second terminal; the PC5-RRC signaling includes the resource indication information of the sidelink transmission resource.

In some embodiments, each set of sidelink configured grant transmission resources includes periodic sidelink transmission resources, and each period includes M1 sidelink transmission resources.

The resource indication information for each set of sidelink configured grant transmission resources includes at least one of the following.

Time domain indication information, used to determine a time domain location of N1 sidelink transmission resources.

Frequency domain indication information, used to determine a frequency domain location and size of the N1 sidelink transmission resources.

A first periodicity parameter, used to determine a periodicity of repetition of the N1 sidelink transmission resources in the time domain.

The number of repetitions K1, used to determine the number of repetitions of the N1 sidelink transmission resources in the time domain.

A second periodicity parameter, used to determine a sidelink configured grant period of the sidelink configured grant transmission resources.

Among them, M1 and N1 are positive integers, K1 is an integer, and M1=N1×(K1+1).

In some embodiments, when K1 is not included in the resource indication information, the default number of repetitions of the N1 sidelink transmission resources is 0, that is, there is no repetition. The N1 sidelink transmission resources are included in each sidelink configured grant period.

In some embodiments, when the second periodicity parameter is not included in the resource indication information, by default the sidelink configured grant transmission resource includes one period of sidelink transmission resources.

In some embodiments, in the sidelink configured grant transmission resource, the sidelink transmission resources of the same sidelink configured grant period are used for the second terminal to transmit the same sidelink data.

In some embodiments, in the sidelink configured grant transmission resources, the sidelink transmission resources of different sidelink configured grant periods are used for the second terminal to transmit different or the same sidelink data.

In some embodiments, the allocation module 910 is used to allocate N2 sidelink transmission resources to the second terminal, where N2 is a positive integer.

The resource indication information of the sidelink transmission resources includes at least one of the following:

Time domain indication information, used to determine a time domain location of the N2 sidelink transmission resources.

Frequency domain indication information, used to determine a frequency domain location and size of the N2 sidelink transmission resources.

In some embodiments, the allocation module 910 is used to allocate M3 sidelink transmission resources to the second terminal.

The resource indication information of the sidelink transmission resources includes at least one of the following.

Time domain indication information, used to determine a time domain location of the N3 sidelink transmission resources.

Frequency domain indication information, used to determine a frequency domain location and size of the N3 sidelink transmission resources.

A first periodicity parameter, used to determine a periodicity of repetition of the N3 sidelink transmission resources in the time domain.

The number of repetitions K3, used to determine the number of repetitions of the N3 sidelink transmission resources in the time domain.

Among them, M3 and N3 are positive integers, K3 is an integer, and M3=N3×(K3+1).

When K3 is not included in the foregoing resource indication information, the default number of repetitions of N3 sidelink transmission resources is 0, that is, there is no repetition.

In some embodiments, N or M sidelink transmission resources are used for the second terminal to transmit the same sidelink data.

In some embodiments, the first periodicity parameter or the second periodicity parameter is represented by the number of slots.

In some embodiments, the slot is a logical slot.

In some embodiments, a time interval between a slot in which a first sidelink transmission resource in the sidelink transmission resource is located and a slot in which a signaling carrying the resource indication information of the sidelink transmission resource is located is greater than a first value.

In some embodiments, the first value is determined in at least one of the following manners: pre-configured, network configured, and determined according to a processing capability of the second terminal.

As shown in FIG. 10, in some embodiments, the terminal device further includes a capability indication information receiving module 1030, used to receive capability indication information transmitted by the second terminal; the capability indication information is used to determine the processing capability of the second terminal.

As shown in FIG. 10, in some embodiments, the terminal device further includes a request receiving module 1040, used to receive sidelink resource request information of the second terminal.

It can be understood that the above and other operations and/or functions of the module in the terminal device according to the embodiments of the present disclosure are intended to implement the corresponding processes of the first terminal in the method 400 of FIG. 4 and the method 600 of FIG. 6, respectively, and will not be repeated herein for the sake of brevity.

The embodiments of the present disclosure further provide a terminal device. FIG. 11 is a structural schematic view of a terminal device 1100 according to further another embodiment of the present disclosure. The terminal device 1100 may be the above-mentioned second terminal and includes components as followed.

A determining module 1110, used to determine at least one sidelink transmission resource allocated by the first terminal.

A transmission module 1120, used to transmit at least one sidelink data through the at least one sidelink transmission resource.

In some embodiments, the determining module 1110 is used to receive resource indication information of the at least one sidelink transmission resource; and determine the at least one sidelink transmission resource allocated by the first terminal according to the resource indication information of the at least one sidelink transmission resource.

In some embodiments, the at least one sidelink transmission resource includes at least one set of sidelink configured grant transmission resources.

The transmission module is configured use the at least one set of sidelink configured grant transmission resources to transmit multiple sidelink data.

In some embodiments, the determining module 1110 is used to receive resource indication information and transmission parameters of the at least one sidelink transmission resource from the first terminal; the resource indication information and transmission parameters of the at least one sidelink transmission resource are carried in the same or different signaling.

In some embodiments, the determining module 1110 is used to receive resource indication information, transmission parameters, and activation information of the at least one sidelink transmission resource from the first terminal; the resource indication information, transmission parameters, and activation information of the at least one sidelink transmission resource are carried in at least two signalings.

In some embodiments, the transmission parameters are carried in a first signaling, and the resource indication information and activation information of the at least one sidelink transmission resource are carried in a second signaling.

In some embodiments, the transmission parameters and the resource indication information of the at least one sidelink transmission resource are carried in a first signaling, and the activation information is carried in a second signaling.

In some embodiments, the transmission parameters are carried in a first signaling, the resource indication information of the at least one sidelink transmission resource is carried in a second signaling, and the activation information is carried in a third signaling.

In some embodiments, the first terminal transmits deactivation information to the second terminal, and the deactivation information is used to deactivate the sidelink configured grant transmission resource.

In some embodiments, the activation information includes an index of the sidelink configured grant transmission resources, which is used to activate the sidelink configured grant transmission resources corresponding to the index.

In some embodiments, the deactivation information includes an index of the sidelink configured grant transmission resources, which is used to deactivate the sidelink configured grant transmission resources corresponding to the index.

In some embodiments, the second signaling is transmitted after the first signaling.

In some embodiments, the second signaling includes: first-stage sidelink control information SCI, second-stage SCI, or MAC CE of sidelink data.

In some embodiments, the determining module 1110 is used to receive a physical sidelink control channel (PSCCH); the PSCCH carries the first-stage SCI, the first-stage SCI including the resource indication information of the sidelink transmission resource.

In some embodiments, the determining module 1110 is used to receive the second-stage SCI; the second-stage SCI includes the resource indication information of the sidelink transmission resource.

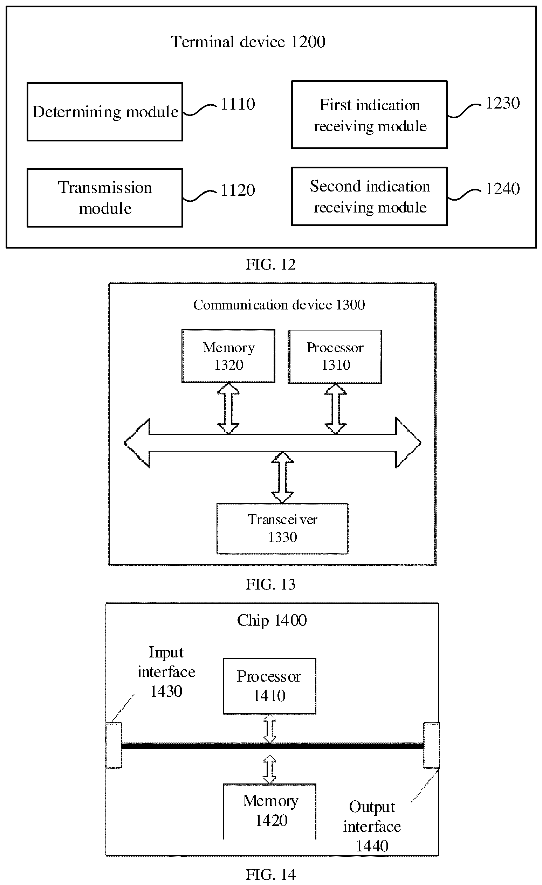

As shown in FIG. 12, in some embodiments, the terminal device further includes components as followed.

A first indication receiving module 1230, used to receive the first indication information carried in the first-stage SCI or the second-stage SCI, and determine whether to transmit the sidelink data according to the first indication information.

In some embodiments, the determining module 1110 is used to receive a physical sidelink shared channel (PSSCH); the PSSCH carries sidelink data, and a MAC CE of the sidelink data includes the resource indication information of the sidelink transmission resource.

As shown in FIG. 12, in some implementation manners, the terminal device further includes components as followed.

A second indication receiving module 1240, used to receive second indication information in the first-stage SCI or the second-stage SCI, and determine whether the MAC CE of the sidelink data includes the resource indication information of the sidelink transmission resource according to the second indication information.

In some embodiments, the second indication information is carried by an information filed in the first-stage SCI or the second-stage SCI and/or a radio network temporary identity (RNTI).

In some embodiments, the determining module 1110 is used to receive a PC5-radio resource control (RRC) signaling; the PC5-RRC signaling includes the resource indication information of the sidelink transmission resource.

In some embodiments, each set of sidelink configured grant transmission resources includes periodic sidelink transmission resources, and each period includes M1 sidelink transmission resources.

The resource indication information for each set of sidelink configured grant transmission resources includes at least one of the following.

Time domain indication information, used to determine a time domain location of the N1 sidelink transmission resources.

Frequency domain indication information, used to determine a frequency domain location and size of the N1 sidelink transmission resources.

A first periodicity parameter, used to determine a periodicity of repetition of the N1 sidelink transmission resources in the time domain.

The number of repetitions K1, used to determine the number of repetitions of the N1 sidelink transmission resources in the time domain.

A second periodicity parameter, used to determine a sidelink configured grant period of the sidelink configured grant transmission resources.

Among them, M1 and N1 are positive integers, K1 is an integer, and M1=N1×(K1+1).

In some embodiments, when K1 is not included in the resource indication information, the default number of repetitions of N1 sidelink transmission resources is 0, that is, there is no repetition. The N1 sidelink transmission resources are included in each sidelink configured grant period.

In some embodiments, when the second periodicity parameter is not included in the resource indication information, by default the sidelink configured grant transmission resource includes one period of sidelink transmission resource.

In some embodiments, in the sidelink configured grant transmission resource, the sidelink transmission resources of the same sidelink configured grant period are used for the second terminal to transmit the same sidelink data.

In some embodiments, in the sidelink configured grant transmission resource, sidelink transmission resources of different sidelink configured grant periods are used for the second terminal to transmit different or the same sidelink data.

In some embodiments, the first terminal allocates N2 sidelink transmission resources to the second terminal, and N2 is a positive integer.

The resource indication information of the sidelink transmission resource includes at least one of the following.

Time domain indication information, used to determine a time domain location of the N2 sidelink transmission resources.

Frequency domain indication information, used to determine a frequency domain location and size of the N2 sidelink transmission resources.

In some embodiments, the first terminal allocates M3 sidelink transmission resources.

The resource indication information of the sidelink transmission resource includes at least one of the following.

Time domain indication information, used to determine a time domain location of the N3 sidelink transmission resources.

Frequency domain indication information, used to determine a frequency domain location and size of the N3 sidelink transmission resources.

A first periodicity parameter, used to determine a periodicity of repetition of the N3 sidelink transmission resources in the time domain.

The number of repetitions K3, used to determine the number of repetitions of the N3 sidelink transmission resources in the time domain.

Among them, M3 and N3 are positive integers, K3 is an integer, and the M3=N3×(K3+1).

When K3 is not included in the resource indication information, the default number of repetitions of N3 sidelink transmission resources is 0, that is, there is no repetition.

In some embodiments, the transmission module 1110 is used to use the N2 or M3 sidelink transmission resources to transmit the same sidelink data.

In some embodiments, the first periodicity parameter or the second periodicity parameter is represented by the number of slots.

In some embodiments, the slot is a logical slot.

In some embodiments, a time interval between a slot in which a first sidelink transmission resource in the sidelink transmission resource is located and a slot in which a signaling carrying the resource indication information of the sidelink transmission resource is located is greater than a first value.

In some embodiments, the first value is determined in at least one of the following manners: pre-configured, network configured, and determined according to a processing capability of the second terminal.

As shown in FIG. 12, in some embodiments, the terminal device further includes components as followed.

A capability indication information transmitting module 1250, used to transmit capability indication information to the first terminal; the capability indication information is used to determine the processing capability of the second terminal.

As shown in FIG. 12, in some embodiments, the terminal device further includes components as followed.

A request transmitting module 1260, used to transmit sidelink resource request information to the first terminal.

It can be understood that the above and other operations and/or functions of the module in the terminal device according to the embodiments of the present disclosure are intended to implement the corresponding processes of the first terminal in the method 700 of FIG. 7, and will not be repeated herein for the sake of brevity.

FIG. 13 is a structural schematic view of a communication device 1300 according to an embodiment of the present disclosure. The communication device 1300 shown in FIG. 13 includes a processor 1310, and the processor 1310 can call and run a computer program from a memory to implement the method in the embodiments of the present disclosure.

In some embodiments, as shown in FIG. 13, the communication device 1300 may further include a memory 1320. The processor 1310 may call and run a computer program from the memory 1320 to implement the method in the embodiments of the present disclosure.

The memory 1320 may be a separate device independent of the processor 1310, or may be integrated in the processor 1310.

In some embodiments, as shown in FIG. 13, the communication device 1300 may further include a transceiver 1330, and the processor 1310 may control the transceiver 1330 to communicate with other devices, specifically, to transmit information or data to, or receive information or data from, other devices.

The transceiver 1330 may include a transmitter and a receiver. The transceiver 1330 may further include an antenna, and the number of antennas may be one or more.

In some embodiments, the communication device 1300 may be the first terminal of the embodiments of the present disclosure, and the communication device 1300 may implement the corresponding procedures implemented by the first terminal in the various methods of the embodiments of the present disclosure, which will not be repeated here for the sake of brevity.

In some embodiments, the communication device 1300 may be the second terminal of the embodiment of the present disclosure, and the communication device 1300 may implement the corresponding procedures implemented by the second terminal in the various methods of the embodiments of the present disclosure, which will not be repeated here for the sake of brevity.

FIG. 14 is a structural schematic view of a chip 1400 according to an embodiment of the present disclosure. The chip 1400 shown in FIG. 14 includes a processor 1410, and the processor 1410 can call and run a computer program from a memory to implement the method in the embodiments of the present disclosure.

In some embodiments, as shown in FIG. 14, the chip 1400 may further include a memory 1420. The processor 1410 can call and run a computer program from the memory 1420 to implement the method in the embodiments of the present disclosure.

The memory 1420 may be a separate device independent of the processor 1410, or may be integrated in the processor 1410.

In some embodiments, the chip 1400 may further include an input interface 1430. The processor 1410 can control the input interface 1430 to communicate with other devices or chips, and specifically, to obtain information or data transmitted by other devices or chips.

In some embodiments, the chip 1400 may further include an output interface 1440. The processor 1410 can control the output interface 1440 to communicate with other devices or chips, specifically, to output information or data to other devices or chips.

In some embodiments, the chip may be applied to the terminal device in the embodiments of the present disclosure, and the chip may implement the corresponding process implemented by the terminal device in each method of the embodiments of the present disclosure, which will not be repeated here for the sake of brevity.

It can be understood that the chip mentioned in the embodiments of the present disclosure may also be referred to as a system-stage chip, a system-chip, a chip system, or a system-on-chip, etc.

The processor may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor may be a microprocessor or any conventional processor.

The memory may be volatile memory or non-volatile memory, or may include both volatile and non-volatile memory. The non-volatile memory may be read-only memory (ROM), programmable read-only memory (PROM), erasable programmable read-only memory (EPROM), electrically EPROM (EEPROM), or flash memory. The volatile memory may be random access memory (RAM).

It can be understood that the memory is exemplary but not restrictive. For example, the memory in the embodiments of the present disclosure may also be static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synch link DRAM (SLDRAM), and direct Rambus RAM (DR RAM), etc. That is, the memory in the embodiments of the present disclosure is intended to include, but is not limited to, these and any other suitable types of memory.

In the above embodiments, it may be implemented in whole or in part by software, hardware, firmware, or any combination thereof. When implemented by software, it may be implemented in the form of a computer program product in whole or in part. The computer program product includes one or more computer instructions. When the computer program instructions are loaded and executed on the computer, the processes or functions described in the embodiments of the present disclosure are generated in whole or in part. The computer may be a general-purpose computer, a special-purpose computer, a computer network, or other programmable devices. The computer instruction may be stored in a computer-readable storage medium, or transmitted from one computer-readable storage medium to another computer-readable storage medium. For example, the computer instruction may be transmitted from a website, computer, server, or data center through a cable (such as coaxial cable, optical fiber, digital subscriber line (DSL)) or wireless (such as infrared, wireless, microwave, etc.) to another website site, computer, server, or data center. The computer-readable storage medium may be any available medium that can be accessed by a computer or a data storage device such as a server or data center integrated with one or more available media. The available medium may be a magnetic medium (for example, a floppy disk, a hard disk, and a magnetic tape), an optical medium (for example, a DVD), or a semiconductor medium (for example, a solid state disk (SSD)).

It can be understood that in the various embodiments of the present disclosure, the values of the sequence numbers of the processes does not mean the order of execution. The execution order of the processes should be determined by its function and intrinsic logic, and shall not constitute any limitation to the processes implemented in the embodiments of the present disclosure.

Those skilled in the art can clearly understand that, for the convenience and conciseness of description, the specific working process of the system, device and unit described above may refer to the corresponding process in the method embodiments, which will not be repeated here.

The above described is only specific implementations of the present disclosure, but the scope of the present disclosure is not limited to this, and those skilled in the art can easily think of changes or substitutions within the technical scope disclosed in the present disclosure, which should be covered by the scope of the present disclosure. Therefore, the scope of the present disclosure shall be subject to the scope of the claims.

## Claims

1. A sidelink resource allocation method, comprising:
allocating, by a first terminal, a sidelink transmission resource to a second terminal; wherein the sidelink transmission resource is used for the second terminal to transmit at least one sidelink data.

2. The method according to claim 1, wherein the allocating, by a first terminal, a sidelink transmission resource to a second terminal comprises:
transmitting, by the first terminal, resource indication information of the sidelink transmission resource to the second terminal; wherein the resource indication information is used to determine the sidelink transmission resource allocated to the second terminal.

3. The method according to claim 1 or 2, wherein the sidelink transmission resource comprises at least one set of sidelink configured grant transmission resources;
the at least one set of sidelink configured grant transmission resources is used for the second terminal to transmit a plurality of sidelink data.

4. The method according to any one of claims 1-3, wherein the first terminal transmits resource indication information and transmission parameters of the sidelink transmission resource to the second terminal; the resource indication information and transmission parameters of the sidelink transmission resource are carried in the same signaling or different signalings.

5. The method according to claim 3, wherein the first terminal transmits resource indication information, transmission parameters, and activation information of the sidelink transmission resource to the second terminal; the resource indication information, transmission parameters, and activation information of the sidelink transmission resource are carried in at least two signalings.

6. The method according to claim 5, wherein the transmission parameters are carried in a first signaling, and the resource indication information and activation information of the sidelink transmission resource are carried in a second signaling.

7. The method according to claim 5, wherein the transmission parameters and the resource indication information of the sidelink transmission resource are carried in a first signaling, and the activation information is carried in a second signaling.

8. The method according to claim 6 or 7, wherein the activation information comprises an index of a corresponding set of sidelink configured grant transmission resources, which is used to activate the set of sidelink configured grant transmission resources corresponding to the index.

9. The method according to any one of claims 6-8, wherein the second signaling is transmitted after the first signaling.

10. The method according to any one of claims 6-9, wherein the second signaling comprises: first-stage sidelink control information (SCI), second-stage SCI, or a media access control (MAC) control element (CE) of sidelink data.

11. The method according to any one of claims 2-10, wherein the transmitting, by the first terminal, resource indication information of the sidelink transmission resource to the second terminal comprises:
transmitting, by the first terminal, a physical sidelink control channel (PSCCH) to the second terminal; wherein the PSCCH carries a first-stage sidelink control information (SCI), the first-stage SCI comprising the resource indication information of the sidelink transmission resource.

12. The method according to any one of claims 2-10, wherein the transmitting, by the first terminal, resource indication information of the sidelink transmission resource to the second terminal comprises:
transmitting, by the first terminal, a second-stage sidelink control information (SCI) to the second terminal; wherein the second-stage SCI comprises the resource indication information of the sidelink transmission resource.

13. The method according to claim 12, further comprising:
carrying first indication information in a first-stage SCI or the second-stage SCI; wherein the first indication information is used to determine whether to transmit sidelink data.

14. The method according to any one of claims 2-10, wherein the transmitting, by the first terminal, resource indication information of the sidelink transmission resource to the second terminal comprises:
transmitting, by the first terminal, a physical sidelink shared channel (PSSCH) to the second terminal; wherein the PSSCH carries sidelink data, and a media access control (MAC) control element (CE) of the sidelink data comprises the resource indication information of the sidelink transmission resource.

15. The method according to claim 14, further comprising:
carrying second indication information in a first-stage sidelink control information (SCI) or a second-stage SCI; wherein the second indication information is used to determine whether the resource indication information of the sidelink transmission resource is included in the MAC CE of the sidelink data.

16. The method according to claim 15, wherein the second indication information is carried by an information field in the first-stage SCI or the second-stage SCI and/or a radio network temporary identity (RNTI).

17. The method according to any one of claims 2-10, wherein the transmitting, by the first terminal, resource indication information of the sidelink transmission resource to the second terminal comprises:
transmitting, by the first terminal, a PC5-radio resource control (RRC) signaling to the second terminal; wherein the PC5-RRC signaling comprises the resource indication information of the sidelink transmission resource.

18. The method according to any one of claims 3-17, wherein each set of sidelink configured grant transmission resources comprises periodic sidelink transmission resources, and each period comprises M1 sidelink transmission resources;
the resource indication information of each set of sidelink configured grant transmission resources comprises at least one of:
time domain indication information, used to determine a location of a time domain of N1 sidelink transmission resources;
frequency domain indication information, used to determine a frequency domain location and a size of the N1 sidelink transmission resources;
a first periodicity parameter, used to determine a periodicity of repetition of the N1 sidelink transmission resources in the time domain;
the number of repetitions K1, used to determine the number of repetitions of the N1 sidelink transmission resources in the time domain; and
a second periodicity parameter, used to determine a sidelink configured grant period of the set of sidelink configured grant transmission resources;
wherein the M1 and N1 are positive integers, the K1 is an integer, and the M1=N1×(K1+1).

19. The method according to any one of claims 3-18, wherein in the set of sidelink configured grant transmission resources, sidelink transmission resources of the same sidelink configured grant periodicity are used for the second terminal to transmit the same sidelink data.

20. The method according to any one of claims 3-18, wherein in the set of sidelink configured grant transmission resources, sidelink transmission resources of different sidelink configured grant periodicities are used for the second terminal to transmit different or the same sidelink data.

21. The method according to any one of claims 2-17, wherein the first terminal is used to allocate N2 sidelink transmission resources to the second terminal, and N2 is a positive integer;
the resource indication information of the sidelink transmission resource comprises at least one of:
time domain indication information, used to determine a location of a time domain of the N2 sidelink transmission resources; and
frequency domain indication information, used to determine a frequency domain location and a size of the N2 sidelink transmission resources.

22. The method according to any one of claims 2-17, wherein the first terminal is used to allocate M3 sidelink transmission resources to the second terminal;
the resource indication information of the sidelink transmission resource comprises at least one of:
time domain indication information, used to determine a location of a time domain of the N3 sidelink transmission resources;
frequency domain indication information, used to determine a frequency domain location and a size of the N3 sidelink transmission resources;
a first periodicity parameter, used to determine a periodicity of repetition of the N3 sidelink transmission resources in the time domain; and
the number of repetitions K3, used to determine the number of repetitions of the N3 sidelink transmission resources in the time domain;
wherein the M3 and N3 are positive integers, the K3 is an integer, and the M3=N3×(K3+1).

23. The method according to claim 21 or 22, wherein the N2 or M3 sidelink transmission resources are used for the second terminal to transmit the same sidelink data.

24. The method according to any one of claims 18, 19, 20, 22, and 23, wherein the first periodicity parameter or the second periodicity parameter is represented by the number of slots.

25. The method according to claim 24, wherein the slots are logical slots.

26. The method according to any one of claims 2-25, wherein a time interval between a slot in which a first sidelink transmission resource in the sidelink transmission resource is located and a slot in which a signaling carrying the resource indication information of the sidelink transmission resource is located is greater than a first value.

27. The method according to claim 26, wherein the first value is determined in at least one of the following manners: pre-configured, network configured, and determined according to a processing capability of the second terminal.

28. The method according to claim 27, further comprising: receiving, by the first terminal, capability indication information transmitted by the second terminal; wherein the capability indication information is used to determine the processing capability of the second terminal.

29. The method according to any one of claims 1-28, further comprising: receiving, by the first terminal, sidelink resource request information of the second terminal.

30. A sidelink resource allocation method, comprising:
determining, by a second terminal, at least one sidelink transmission resource allocated by a first terminal; and
transmitting, by the second terminal, at least one sidelink data through the at least one sidelink transmission resource.

31. The method according to claim 30, wherein the determining, by a second terminal, at least one sidelink transmission resource allocated by a first terminal comprises:
receiving, by the second terminal, resource indication information of the at least one sidelink transmission resource; and
determining, by the second terminal, the at least one sidelink transmission resource allocated by the first terminal according to the resource indication information of the at least one sidelink transmission resource.

32. The method according to claim 30 or 31, wherein the at least one sidelink transmission resource comprises at least one set of sidelink configured grant transmission resources;
the second terminal is used to transmit a plurality of sidelink data through the at least one set of sidelink configured grant transmission resources.

33. The method according to any one of claims 30-32, wherein the second terminal is used to receive resource indication information and transmission parameters of the at least one sidelink transmission resource from the first terminal; the resource indication information and transmission parameters of the at least one sidelink transmission resource are carried in the same signaling or different signalings.

34. The method according to claim 32, wherein the second terminal is used to receive resource indication information, transmission parameters, and activation information of the at least one sidelink transmission resource from the first terminal; the resource indication information, transmission parameters, and activation information of the at least one sidelink transmission resource are carried in at least two signalings.

35. The method according to claim 34, wherein the transmission parameters are carried in a first signaling, and the resource indication information and activation information of the at least one sidelink transmission resource are carried in a second signaling.

36. The method according to claim 34, wherein the transmission parameters and the resource indication information of the at least one sidelink transmission resource are carried in a first signaling, and the activation information is carried in a second signaling.

37. The method according to claim 35 or 36, wherein the activation information comprises an index of a corresponding set of sidelink configured grant transmission resources, which is used to activate the set of sidelink configured grant transmission resources corresponding to the index.

38. The method according to any one of claims 35-37, wherein the second signaling is transmitted after the first signaling.

39. The method according to any one of claims 35-38, wherein the second signaling comprises: first-stage sidelink control information (SCI), second-stage SCI, or a media access control (MAC) control element (CE) of sidelink data.

40. The method according to any one of claims 31-39, wherein the receiving, by the second terminal, resource indication information of the at least one sidelink transmission resource comprises:
receiving, by the second terminal, a physical sidelink control channel (PSCCH); wherein the PSCCH carries a first-stage sidelink control information (SCI), the first-stage SCI comprising the resource indication information of the at least one sidelink transmission resource.

41. The method according to any one of claims 31-39, wherein the receiving, by the second terminal, resource indication information of the at least one sidelink transmission resource comprises:
receiving, by the second terminal, a second-stage sidelink control information (SCI); wherein the second-stage SCI comprises the resource indication information of the at least one sidelink transmission resource.

42. The method according to claim 41, further comprising:
receiving first indication information carried in a first-stage SCI or the second-stage SCI, and determining whether to transmit sidelink data according to the first indication information.

43. The method according to any one of claims 31-39, wherein the receiving, by the second terminal, resource indication information of the at least one sidelink transmission resource comprises:
receiving, by the second terminal, a physical sidelink shared channel (PSSCH); wherein the PSSCH carries sidelink data, and a media access control (MAC) control element (CE) of the sidelink data comprises the resource indication information of the at least one sidelink transmission resource.

44. The method according to claim 43, further comprising:
carrying second indication information in a first-stage sidelink control information (SCI) or a second-stage SCI; wherein the second indication information is used to determine whether the resource indication information of the at least one sidelink transmission resource is included in the MAC CE of the sidelink data.

45. The method according to claim 44, wherein the second indication information is carried by an information filed in the first-stage SCI or the second-stage SCI and/or a radio network temporary identity (RNTI).

46. The method according to any one of claims 31-39, wherein the receiving, by the second terminal, resource indication information of the at least one sidelink transmission resource comprises:
receiving, by the second terminal, a PC5-radio resource control (RRC) signaling; wherein the PC5-RRC signaling comprises the resource indication information of the at least one sidelink transmission resource.

47. The method according to any one of claims 32-46, wherein each set of sidelink configured grant transmission resources comprises periodic sidelink transmission resources, and each period comprises M1 sidelink transmission resources;
the resource indication information of each set of sidelink configured grant transmission resources comprises at least one of:
time domain indication information, used to determine a location of a time domain of N1 sidelink transmission resources;
frequency domain indication information, used to determine a frequency domain location and a size of the N1 sidelink transmission resources;
a first periodicity parameter, used to determine a periodicity of repetition of the N1 sidelink transmission resources in the time domain;
the number of repetitions K1, used to determine the number of repetitions of the N1 sidelink transmission resources in the time domain; and
a second periodicity parameter, used to determine a sidelink configured grant period of the set of sidelink configured grant transmission resources;
wherein the M1 and N1 are positive integers, the K1 is an integer, and the M1=N1×(K1+1).

48. The method according to any one of claims 32-47, wherein in the set of sidelink configured grant transmission resources, sidelink transmission resources of the same sidelink configured grant periodicity are used for the second terminal to transmit the same sidelink data.

49. The method according to any one of claims 32-47, wherein in the set of sidelink configured grant transmission resources, sidelink transmission resources of different sidelink configured grant periodicities are used for the second terminal to transmit different or the same sidelink data.

50. The method according to any one of claims 31-46, wherein the first terminal is used to allocate N2 sidelink transmission resources to the second terminal, and N2 is a positive integer;
the resource indication information of the sidelink transmission resource comprises at least one of:
time domain indication information, used to determine a location of a time domain of the N2 sidelink transmission resources; and
frequency domain indication information, used to determine a frequency domain location and a size of the N2 sidelink transmission resources.

51. The method according to any one of claims 31-46, wherein the first terminal is used to allocate M3 sidelink transmission resources to the second terminal;
the resource indication information of the sidelink transmission resource comprises at least one of:
time domain indication information, used to determine a location of a time domain of the N3 sidelink transmission resources;
frequency domain indication information, used to determine a frequency domain location and a size of the N3 sidelink transmission resources;
a first periodicity parameter, used to determine a periodicity of repetition of the N3 sidelink transmission resources in the time domain; and
the number of repetitions K3, used to determine the number of repetitions of the N3 sidelink transmission resources in the time domain;
wherein the M3 and N3 are positive integers, the K3 is an integer, and the M3=N3×(K3+1).

52. The method according to claim 50 or 51, wherein the N2 or M3 sidelink transmission resources are used for the second terminal to transmit the same sidelink data.

53. The method according to any one of claims 47, 48, 49, 51, and 52, wherein the first periodicity parameter or the second periodicity parameter is represented by the number of slots.

54. The method according to claim 53, wherein the slots are logical slots.

55. The method according to any one of claims 31-54, wherein a time interval between a slot in which a first sidelink transmission resource in the at least one sidelink transmission resource is located and a slot in which a signaling carrying the resource indication information of the at least one sidelink transmission resource is located is greater than a first value.

56. The method according to claim 55, wherein the first value is determined in at least one of the following manners: pre-configured, network configured, and determined according to a processing capability of the second terminal.

57. The method according to claim 56, further comprising: transmitting, by the second terminal, capability indication information to the first terminal; wherein the capability indication information is used to determine the processing capability of the second terminal.

58. The method according to any one of claims 30-57, further comprising: transmitting, by the second terminal, sidelink resource request information to the first terminal.

59. A terminal device, comprising:
an allocation module, used to allocate a sidelink transmission resource to a second terminal; wherein the sidelink transmission resource is used for the second terminal to transmit at least one sidelink data.

60. The terminal device according to claim 59, wherein the allocation module is further used to transmit resource indication information of the sidelink transmission resource to the second terminal; wherein the resource indication information is used to determine the sidelink transmission resource allocated to the second terminal.

61. The terminal device according to claim 59 or 60, wherein the sidelink transmission resource comprises at least one set of sidelink configured grant transmission resources;
the at least one set of sidelink configured grant transmission resources is used for the second terminal to transmit a plurality of sidelink data.

62. The terminal device according to any one of claims 59-61, wherein the allocation module is further used to transmit resource indication information and transmission parameters of the sidelink transmission resource to the second terminal; the resource indication information and transmission parameters of the sidelink transmission resource are carried in the same signaling or different signalings.

63. The terminal device according to claim 62, wherein the allocation module is further used to transmit resource indication information, transmission parameters, and activation information of the sidelink transmission resource to the second terminal; the resource indication information, transmission parameters, and activation information of the sidelink transmission resource are carried in at least two signalings.

64. The terminal device according to claim 63, wherein the transmission parameters are carried in a first signaling, and the resource indication information and activation information of the sidelink transmission resource are carried in a second signaling.

65. The terminal device according to claim 63, wherein the transmission parameters and the resource indication information of the sidelink transmission resource are carried in a first signaling, and the activation information is carried in a second signaling.

66. The terminal device according to claim 64 or 65, wherein the activation information comprises an index of a corresponding set of sidelink configured grant transmission resources, which is used to activate the set of sidelink configured grant transmission resources corresponding to the index.

67. The terminal device according to any one of claims 64-66, wherein the second signaling is transmitted after the first signaling.

68. The terminal device according to any one of claims 64-67, wherein the second signaling comprises: first-stage sidelink control information (SCI), second-stage SCI, or a media access control (MAC) control element (CE) of sidelink data.

69. The terminal device according to any one of claims 60-68, wherein the allocation module is further used to transmit a physical sidelink control channel (PSCCH) to the second terminal; wherein the PSCCH carries a first-stage sidelink control information (SCI), the first-stage SCI comprising the resource indication information of the sidelink transmission resource.

70. The terminal device according to any one of claims 60-68, wherein the allocation module is further used to transmit a second-stage sidelink control information (SCI) to the second terminal; wherein the second-stage SCI comprises the resource indication information of the sidelink transmission resource.

71. The terminal device according to claim 70, further comprising:
a first indication module, used to carry first indication information in a first-stage SCI or the second-stage SCI; wherein the first indication information is used to determine whether to transmit sidelink data.

72. The terminal device according to any one of claims 60-68, wherein the allocation module is further used to transmit a physical sidelink shared channel (PSSCH) to the second terminal; wherein the PSSCH carries sidelink data, and a media access control (MAC) control element (CE) of the sidelink data comprises the resource indication information of the sidelink transmission resource.

73. The terminal device according to claim 72, further comprising:
a first indication module, used to carry second indication information in a first-stage sidelink control information (SCI) or a second-stage SCI; wherein the second indication information is used to determine whether the resource indication information of the sidelink transmission resource is included in the MAC CE of the sidelink data.

74. The terminal device according to claim 73, wherein the second indication information is carried by an information filed in the first-stage SCI or the second-stage SCI and/or a radio network temporary identity (RNTI).

75. The terminal device according to any one of claims 60-68, wherein the allocation module is further used to transmit a PC5-radio resource control (RRC) signaling to the second terminal; wherein the PC5-RRC signaling comprises the resource indication information of the sidelink transmission resource.

76. The terminal device according to any one of claims 61-75, wherein each set of sidelink configured grant transmission resources comprises periodic sidelink transmission resources, and each period comprises M1 sidelink transmission resources;
the resource indication information of each set of sidelink configured grant transmission resources comprises at least one of:
time domain indication information, used to determine a location of a time domain of N1 sidelink transmission resources;
frequency domain indication information, used to determine a frequency domain location and a size of the N1 sidelink transmission resources;
a first periodicity parameter, used to determine a periodicity of repetition of the N1 sidelink transmission resources in the time domain;
the number of repetitions K1, used to determine the number of repetitions of the N1 sidelink transmission resources in the time domain; and
a second periodicity parameter, used to determine a sidelink configured grant period of the set of sidelink configured grant transmission resources;
wherein the M1 and N1 are positive integers, the K1 is an integer, and the M1=N1×(K1+1).

77. The terminal device according to any one of claims 61-76, wherein in the set of sidelink configured grant transmission resources, sidelink transmission resources of the same sidelink configured grant periodicity are used for the second terminal to transmit the same sidelink data.

78. The terminal device according to any one of claims 61-76, wherein in the set of sidelink configured grant transmission resources, sidelink transmission resources of different sidelink configured grant periodicities are used for the second terminal to transmit different or the same sidelink data.

79. The terminal device according to any one of claims 60-75, wherein the allocation module is used to allocate N2 sidelink transmission resources to the second terminal, and N2 is a positive integer;
the resource indication information of the sidelink transmission resource comprises at least one of:
time domain indication information, used to determine a location of a time domain of the N2 sidelink transmission resources; and
frequency domain indication information, used to determine a frequency domain location and a size of the N2 sidelink transmission resources.

80. The terminal device according to any one of claims 60-75, wherein the allocation module is used to allocate M3 sidelink transmission resources to the second terminal;
the resource indication information of the sidelink transmission resource comprises at least one of:
time domain indication information, used to determine a location of a time domain of the N3 sidelink transmission resources;
frequency domain indication information, used to determine a frequency domain location and a size of the N3 sidelink transmission resources;
a first periodicity parameter, used to determine a periodicity of repetition of the N3 sidelink transmission resources in the time domain; and
the number of repetitions K3, used to determine the number of repetitions of the N3 sidelink transmission resources in the time domain;
wherein the M3 and N3 are positive integers, the K3 is an integer, and the M3=N3×(K3+1).

81. The terminal device according to claim 79 or 80, wherein the N2 or M3 sidelink transmission resources are used for the second terminal to transmit the same sidelink data.

82. The terminal device according to any one of claims 76, 77, 78, 80, and 81, wherein the first periodicity parameter or the second periodicity parameter is represented by the number of slots.

83. The terminal device according to claim 82, wherein the slots are logical slots.

84. The terminal device according to any one of claims 60-83, wherein a time interval between a slot in which a first sidelink transmission resource in the sidelink transmission resource is located and a slot in which a signaling carrying the resource indication information of the sidelink transmission resource is located is greater than a first value.

85. The terminal device according to claim 84, wherein the first value is determined in at least one of the following manners: pre-configured, network configured, and determined according to a processing capability of the second terminal.

86. The terminal device according to claim 85, further comprising: a capability indication information receiving module, used to receive capability indication information transmitted by the second terminal; wherein the capability indication information is used to determine the processing capability of the second terminal.

87. The terminal device according to any one of claims 59-86, further comprising: a request receiving module, used to receive sidelink resource request information of the second terminal.

88. A terminal device, comprising
a determining module, used to determine at least one sidelink transmission resource allocated by a first terminal; and
a transmission module, used to transmit at least one sidelink data through the at least one sidelink transmission resource.

89. The terminal device according to claim 88, wherein the determining module is further used to receive resource indication information of the at least one sidelink transmission resource, and determine the at least one sidelink transmission resource allocated by the first terminal according to the resource indication information of the at least one sidelink transmission resource.

90. The terminal device according to claim 88 or 89, wherein the at least one sidelink transmission resource comprises at least one set of sidelink configured grant transmission resources;
the transmission module is used to transmit a plurality of sidelink data through the at least one set of sidelink configured grant transmission resources.

91. The terminal device according to any one of claims 88-90, wherein the determining module is used to receive resource indication information and transmission parameters of the at least one sidelink transmission resource from the first terminal; the resource indication information and transmission parameters of the at least one sidelink transmission resource are carried in the same signaling or different signalings.

92. The terminal device according to claim 90, wherein the determining module is used to receive resource indication information, transmission parameters, and activation information of the at least one sidelink transmission resource from the first terminal; the resource indication information, transmission parameters, and activation information of the at least one sidelink transmission resource are carried in at least two signalings.

93. The terminal device according to claim 92, wherein the transmission parameters are carried in a first signaling, and the resource indication information and activation information of the at least one sidelink transmission resource are carried in a second signaling.

94. The terminal device according to claim 92, wherein the transmission parameters and the resource indication information of the at least one sidelink transmission resource are carried in a first signaling, and the activation information is carried in a second signaling.

95. The terminal device according to claim 93 or 94, wherein the activation information comprises an index of a corresponding set of sidelink configured grant transmission resources, which is used to activate the set of sidelink configured grant transmission resources corresponding to the index.

96. The terminal device according to any one of claims 93-95, wherein the second signaling is transmitted after the first signaling.

97. The terminal device according to any one of claims 93-96, wherein the second signaling comprises: first-stage sidelink control information (SCI), second-stage SCI, or a media access control (MAC) control element (CE) of sidelink data.

98. The terminal device according to any one of claims 89-97, wherein the determining module is used to receive a physical sidelink control channel (PSCCH); wherein the PSCCH carries a first-stage sidelink control information (SCI), the first-stage SCI comprising the resource indication information of the at least one sidelink transmission resource.

99. The terminal device according to any one of claims 89-97, wherein the determining module is used to receive a second-stage sidelink control information (SCI); wherein the second-stage SCI comprises the resource indication information of the at least one sidelink transmission resource.

100. The terminal device according to claim 99, further comprising:
a first indication receiving module, used to receive first indication information carried in a first-stage SCI or the second-stage SCI, and determine whether to transmit sidelink data according to the first indication information.

101. The terminal device according to any one of claims 89-98, wherein the determining module is used to receive a physical sidelink shared channel (PSSCH); wherein the PSSCH carries sidelink data, and a media access control (MAC) control element (CE) of the sidelink data comprises the resource indication information of the at least one sidelink transmission resource.

102. The terminal device according to claim 101, further comprising:
a second indication receiving module, used to receive second indication information carried in a first-stage sidelink control information (SCI) or a second-stage SCI, and determine whether the resource indication information of the at least one sidelink transmission resource is included in the MAC CE of the sidelink data according to the second indication information.

103. The terminal device according to claim 102, wherein the second indication information is carried by an information filed in the first-stage SCI or the second-stage SCI and/or a radio network temporary identity (RNTI).

104. The terminal device according to any one of claims 89-98, wherein the determining module is used to receive a PC5-radio resource control (RRC) signaling; wherein the PC5-RRC signaling comprises the resource indication information of the at least one sidelink transmission resource.

105. The terminal device according to any one of claims 90-104, wherein each set of sidelink configured grant transmission resources comprises periodic sidelink transmission resources, and each period comprises M1 sidelink transmission resources;
the resource indication information of each set of sidelink configured grant transmission resources comprises at least one of:
time domain indication information, used to determine a location of a time domain of N1 sidelink transmission resources;
frequency domain indication information, used to determine a frequency domain location and a size of the N1 sidelink transmission resources;
a first periodicity parameter, used to determine a periodicity of repetition of the N1 sidelink transmission resources in the time domain;
the number of repetitions K1, used to determine the number of repetitions of the N1 sidelink transmission resources in the time domain; and
a second periodicity parameter, used to determine a sidelink configured grant period of the set of sidelink configured grant transmission resources;
wherein the M1 and N1 are positive integers, the K1 is an integer, and the M1=N1×(K1+1).

106. The terminal device according to any one of claims 90-105, wherein in the set of sidelink configured grant transmission resources, sidelink transmission resources of the same sidelink configured grant periodicity are used for the second terminal to transmit the same sidelink data.

107. The terminal device according to any one of claims 90-105, wherein in the set of sidelink configured grant transmission resources, sidelink transmission resources of different sidelink configured grant periodicities are used for the second terminal to transmit different or the same sidelink data.

108. The terminal device according to any one of claims 89-104, wherein the first terminal is used to allocate N2 sidelink transmission resources, and N2 is a positive integer;
the resource indication information of the sidelink transmission resource comprises at least one of:
time domain indication information, used to determine a location of a time domain of the N2 sidelink transmission resources; and
frequency domain indication information, used to determine a frequency domain location and a size of the N2 sidelink transmission resources.

109. The terminal device according to any one of claims 89-104, wherein the first terminal is used to allocate M3 sidelink transmission resources;
the resource indication information of the sidelink transmission resource comprises at least one of:
time domain indication information, used to determine a location of a time domain of the N3 sidelink transmission resources;
frequency domain indication information, used to determine a frequency domain location and a size of the N3 sidelink transmission resources;
a first periodicity parameter, used to determine a periodicity of repetition of the N3 sidelink transmission resources in the time domain; and
the number of repetitions K3, used to determine the number of repetitions of the N3 sidelink transmission resources in the time domain;
wherein the M3 and N3 are positive integers, the K3 is an integer, and the M3=N3×(K3+1).

110. The terminal device according to claim 108 or 109, wherein the N2 or M3 sidelink transmission resources are used for the second terminal to transmit the same sidelink data.

111. The terminal device according to any one of claims 105, 106, 107, 109, and 110, wherein the first periodicity parameter or the second periodicity parameter is represented by the number of slots.

112. The terminal device according to claim 111, wherein the slots are logical slots.

113. The terminal device according to any one of claims 89-112, wherein a time interval between a slot in which a first sidelink transmission resource in the at least one sidelink transmission resource is located and a slot in which a signaling carrying the resource indication information of the at least one sidelink transmission resource is located is greater than a first value.

114. The terminal device according to claim 113, wherein the first value is determined in at least one of the following manners: pre-configured, network configured, and determined according to a processing capability of the terminal device.

115. The terminal device according to claim 114, further comprising: a capability indication information transmitting module, used to transmit capability indication information to the first terminal; wherein the capability indication information is used to determine the processing capability of the terminal device.

116. The terminal device according to any one of claims 88-115, further comprising: a request transmitting module, used to transmit sidelink resource request information to the first terminal.

117. A terminal device, comprising a processor and a memory; wherein the memory is used to store a computer program, and the processor is used to call and execute the computer program stored in the memory to perform the method according to any one of claims 1-58.

118. A chip, comprising a processor used to call and execute a computer program stored in a memory to cause a device arranged with the chip to perform the method according to any one of claims 1-58.

119. A computer-readable storage medium, used to store a computer program capable of causing a computer to perform the method according to any one of claims 1-58.

120. A computer program product, comprising a computer program capable of causing a computer to perform the method according to any one of claims 1-58.

121. A computer program, capable of causing a computer to perform the method according to any one of claims 1-58.
